# EUROPEAN PATENT APPLICATION

(11) **EP 4 468 789 A1**
(43) Date of publication of application: **27.11.2024**
(21) Application number: 22919533.4
(22) Date of filing: 17.01.2022
(51) Int. Cl.: H04W 52/02, H04W 24/08

(54) **MEASUREMENT METHODS AND APPARATUSES**

(71) Applicant: Beijing Xiaomi Mobile Software Co., Ltd., Beijing 100085 (CN)
(72) Inventor: HU, Ziquan, Beijing 100085 (CN); LI, Yanhua, Beijing 100085 (CN)
(74) Representative: Stöckeler, Ferdinand
(86) International application number: PCT/CN2022/072340
(87) International publication number: WO 2023/133887

(57) **Abstract**

The present disclosure can be applied in the field of mobile communication, and provided are measurement methods and apparatuses. A method comprises: a terminal device acquires a measurement value of a target measurement, the target measurement comprising RLM measurement and/or RRM measurement; and a target event triggered by the terminal device is determined according to the measurement value and reference information corresponding to the target measurement, wherein target events comprise an enter relaxation event or an exit relaxation event. As a consequence, effective determination of whether the terminal device triggers an enter relaxation event according to the measurement value of the target measurement and the reference information corresponding to the target measurement can be implemented, and thus when the terminal device triggers the enter relaxation event, the enter relaxation event can be reported to a network device so as to execute a relaxation mechanism, and a battery life capability of the terminal device is improved.

## Description

### TECHNICAL FIELD

The disclosure relates to a field of communication technologies, in particular to measurement methods and apparatuses.

### BACKGROUND

The R17 standard has been introduced into a relaxation mechanism in order to apply the relaxation mechanism to terminals that meet a relaxation criteria. For example, a measurement gap for periodically measuring a downlink reference signal by the terminal may be extended, to reduce a power consumption of the terminal and improve endurance of the terminal. Therefore, it is very important to detect an event triggered by the terminal in order to determine whether the terminal is capable of executing the relaxation mechanism.

### SUMMARY

According to a first aspect of embodiments of the disclosure, a measurement method performed by a terminal is provided. The method includes: obtaining a measurement value of a target measurement, in which the target measurement includes a radio link monitor (RLM) measurement and/or a radio resource management (RRM) measurement; and determining a target event triggered by the terminal based on the measurement value and reference information corresponding to the target measurement, in which the target event includes a relaxation entering event or a relaxation exiting event.

In the technical solution, the terminal obtains the measurement value of the target measurement. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving an accuracy and reliability of an event determination result.

According to a second aspect of embodiments of the disclosure, another measurement method performed by a network device is provided. The method includes: receiving a target event and/or a measurement value sent by a terminal, in which the measurement value is a measurement value of a target measurement, the target measurement includes a radio link monitor (RLM) measurement and/or a radio resource management (RRM) measurement, the target event is determined based on the measurement value and reference information corresponding to the target measurement, and the target event includes a relaxation entering event or a relaxation exiting event.

According to a third aspect of embodiments of the disclosure, a measurement apparatus is provided. The apparatus has some or all functions of the terminal which implements the method described in the first aspect. For example, the measurement apparatus may have the function of some or all embodiments of the disclosure, or may have the function of independently implementing any embodiment of the disclosure. The function can be implemented by hardware, or can be implemented by executing corresponding software using the hardware. The hardware or software includes one or more units or modules corresponding to the above functions.

According to a fourth aspect of embodiments of the disclosure, another measurement apparatus is provided. The apparatus has some or all functions of the network device in the method examples described in the second aspect. For example, the measurement apparatus may have the function in some or all embodiments of the disclosure, or may have the function of independently implementing any embodiment of the disclosure. The function may be implemented by the hardware, or may be implemented by executing corresponding software using the hardware. The hardware or software includes one or more units or modules corresponding to the foregoing functions.

According to a fifth aspect of embodiments of the disclosure, a measurement apparatus including a processor is provided. When the processor calls a computer program stored in a memory, the method of the first aspect above or the method of the second aspect above is implemented.

According to a sixth aspect of embodiments of the disclosure, another measurement apparatus is provided. The apparatus includes a processor and a memory having computer programs stored thereon. When the computer programs are executed by the processor, the method described above in the first aspect or the method described above in the second aspect is implemented.

According to a seventh aspect of embodiments of the disclosure, another measurement apparatus is provided. The apparatus includes a processor and an interface circuit is provided. The interface circuit is configured to receive code instructions and transmit them to the processor, and the processor is configured to run the code instructions to cause the apparatus to implement the method described above in the first aspect or the method described above in the second aspect.

According to an eighth aspect of embodiments of the disclosure, a communication system is provided. The system includes the measurement apparatus of the third aspect, or the system includes the measurement apparatus of the fourth aspect, or the system includes the measurement apparatus of the fifth aspect, or the system includes the measurement apparatus of the sixth aspect, or the system includes the measurement apparatus of the seventh aspect.

According to a ninth aspect of embodiments of the disclosure, a computer-readable storage medium for storing instructions for use by a terminal is provided. When the instructions are executed, the terminal is caused to implement the method of the first aspect. Or, the computer-readable storage medium is used for storing instructions for use by a network device. When the instructions are executed, the network device is caused to implement the method of the second aspect.

According to a tenth aspect of embodiments of the disclosure, a computer program product including computer programs is provided. When the computer programs run on a computer, the computer is caused to implement the method of the first aspect or the method of the second aspect.

According to an eleventh aspect of embodiments of the disclosure, a chip system is provided. The chip system includes at least one processor and an interface, for supporting a terminal in realizing functions involved in the first aspect or supporting a network device in realizing functions involved in the second aspect, e.g., at least one of determining or processing data and information involved in the method described above. In a possible design, the chip system further includes a memory, which is configured to store necessary computer programs and data for the terminal and the network device. The chip system may consist of chips or may include a chip and other discrete devices.

According to a twelfth aspect of embodiments of the disclosure, a computer program is provided. When the computer program runs on a computer, the computer is caused to implement the method of the first aspect or the method of the second aspect.

### BRIEF DESCRIPTION OF THE DRAWINGS

In order to more clearly illustrate the technical solutions in the embodiments or background art of the disclosure, the accompanying drawings used in the embodiments or background art of the disclosure will be described below.
FIG. 1 is a schematic diagram of a communication system provided by an embodiment of the disclosure.
FIG. 2 is a flowchart of a measurement method provided by an embodiment of the disclosure.
FIG. 3 is a flowchart of a measurement method provided by an embodiment of the disclosure.
FIG. 4 is a flowchart of a measurement method provided by an embodiment of the disclosure.
FIG. 5 is a flowchart of a measurement method provided by an embodiment of the disclosure.
FIG. 6 is a flowchart of a measurement method provided by an embodiment of the disclosure.
FIG. 7 is a flowchart of a measurement method provided by an embodiment of the disclosure.
FIG. 8 is a flowchart of a measurement method provided by an embodiment of the disclosure.
FIG. 9 is a flowchart of a measurement method provided by an embodiment of the disclosure.
FIG. 10 is a flowchart of a measurement method provided by an embodiment of the disclosure.
FIG. 11 is a flowchart of a measurement method provided by an embodiment of the disclosure.
FIG. 12 is a flowchart of a measurement method provided by an embodiment of the disclosure.
FIG. 13 is a flowchart of a measurement method provided by an embodiment of the disclosure.
FIG. 14 is a flowchart of a measurement method provided by an embodiment of the disclosure.
FIG. 15 is a flowchart of a measurement method provided by an embodiment of the disclosure.
FIG. 16 is a flowchart of a measurement method provided by an embodiment of the disclosure.
FIG. 17 is a flowchart of a measurement method provided by an embodiment of the disclosure.
FIG. 18 is a schematic diagram of a measurement apparatus provided by an embodiment of the disclosure.
FIG. 19 is a schematic diagram of a measurement apparatus provided by an embodiment of the disclosure.
FIG. 20 is a schematic diagram of a chip provided by an embodiment of the disclosure.

### DETAILED DESCRIPTION

In order to better understand a measurement method disclosed in embodiments of the disclosure, a communication system to which the embodiments of the disclosure are applied is first described below.

In order to make the objects, technical solutions, and advantages of the disclosure clearer, the embodiments of the disclosure will be described in further detail below in combination with the accompanying drawings.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

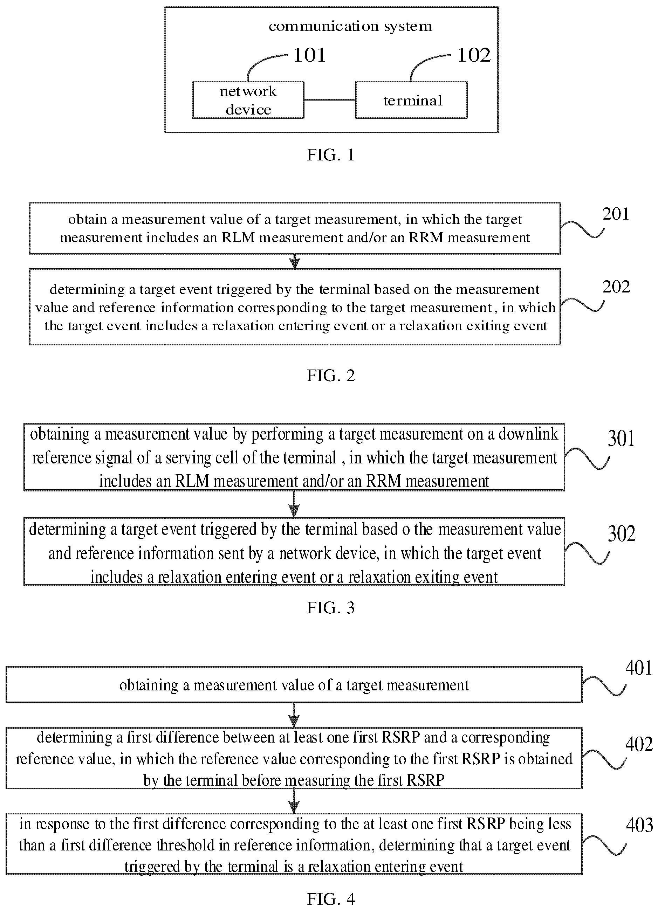

As illustrated in FIG. 1, FIG. 1 is a schematic diagram of a communication system provided by an embodiment of the disclosure. The communication system may include, but is not limited to, a network device and a terminal. The number and form of devices shown in FIG. 1 are only for examples and do not constitute a limitation on the embodiments of the disclosure, and the communication system may include two or more network devices and two or more terminals in practical applications. The communication system shown in FIG. 1 includes, for example, one network device 101 and one terminal 102.

It should be noted that the technical solutions of the embodiments of the disclosure can be used in various communication systems, such as, a long term evolution (LTE) system, a 5th generation (5G) mobile communication system, a 5G new radio (NR) system, or other future new mobile communication systems.

The network device 101 in the embodiment of the present disclosure is an entity used to send or receive signals on a network side. For example, the network device 101 may be an evolved NodeB (eNB), a transmission reception point or transmit receive point (TRP), a next generation NodeB (gNB) in an NR system, a base station in a future mobile communication system or an access node in a wireless fidelity (Wi-Fi^{™}) system, and the like. Specific technologies and specific device forms used by the network device are not limited in the embodiments of the present disclosure. The network device provided in the embodiments of the present disclosure may be composed of a central unit (CU) and a distributed unit (DU). The CU may also be referred to as a control unit. The CU-DU structure may split a protocol layer of the network device, for example, a protocol layer of the base station, some functions of the protocol layer are placed in the CU for centralized control, and some or all of the remaining functions of the protocol layer are distributed in the DU, which is intensively controlled by the CU.

The terminal 102 in the embodiments of the present disclosure is an entity used to receive or send signals on a user side, for example, a mobile phone. The terminal may also be referred to as a terminal, a user equipment (UE), a mobile station (MS), a mobile terminal (MT), or the like. The terminal may be an automobile with a communication function, an intelligent automobile, a mobile phone, a wearable device, a pad, a computer with a wireless transceiver function, a virtual reality (VR) terminal, an augmented reality (AR) terminal, a wireless terminal in the industrial control, a wireless terminal in the self-driving, a wireless terminal in the remote medical surgery, a wireless terminal in the smart grid, a wireless terminal in the transportation safety, a wireless terminal in the smart city, a wireless terminal in the smart home, etc. Specific technologies and specific device forms used by the terminal are not limited in the embodiments of the present disclosure.

In the above communication system, for terminals that meet a relaxation criteria, such as a terminal in a stationary state (or a low-mobility state) and/or has a good channel state, the terminal can perform a radio link monitor (RLM) relaxation mechanism, a beam failure detection (BFD) relaxation mechanism, and a radio resource management (RRM) relaxation mechanism. For example, for a terminal that meets the relaxation criteria, a measurement gap for periodically measuring a downlink reference signal terminalis extended, to reduce a power consumption of the terminal and improve endurance of the terminal. Therefore, it is very important to detect an event triggered by the terminal in order to determine whether the terminal is capable of executing the relaxation mechanism.

### 1. RLM relaxation mechanism

The RLM principle is provided as follows.

A terminal in a radio resource control (RRC) connected (RRC_CONNECTED) state can monitor a downlink radio link quality by measuring a downlink RLM-reference signal (RLM-RS) of a serving cell (e.g., measuring a special cell (SpCell) inside an active bandwidth part (BWP)), such as a synchronization signal and physical broadcast channel (PBCH) block (SSB)-RS and/or a channel-state information (CSI)-RS, and determine whether the terminal and the serving cell are in a downlink in-sync (IS) state or an out-of-sync (OOS) state. The specific approach is described below.

The terminal periodically measures each RLM-RS, and compares a measurement value of the measurement (i.e., a signal to interference plus noise ratio (SINR), which is also called signal-to-noise interference ratio) with an in-sync threshold (Qᵢₙ) and an out-of-sync threshold (Qₒᵤₜ), in order to determine the IS state/OOS state of the terminal, and then reports the determined IS state/OOS state to a higher layer via a physical layer.

In detail, it is possible to evaluate, within an out-of-sync evaluation cycle (T_{Evaluate_out}), whether the measurement values are less than the Qₒᵤₜ, and if all of the measurement values are less than the Qₒᵤₜ, the physical layer (L1) reports an OOS indication to the higher layer. Also, it is possible to evaluate, within an in-sync evaluation cycle (T_{Evaluate_in}), whether the measurement values are greater than the Qᵢₙ, if any of the measurement values is greater than the Qᵢₙ, L1 reports an IS indication to the higher layer.

The higher layer decides the next action based on the reported OOS indication/IS indication. That is, if an OOS counter records N310 OOS indications that have been consecutively reported by the physical layer, the terminal starts a radio link failure (RLF) timer T310 configured by the network device. If an IS counter records N311 IS indications that has been consecutively reported by the physical layer, T310 is stopped. If T310 is expired, the terminal reports an RLF to the network device.

The R17 standard has been introduced into the RLM relaxation mechanism. For terminals that meet the relaxation criteria, i.e., terminals that are in a stationary state and/or have a good channel state, the RLM relaxation mechanism can be performed by the terminal. For example, the measurement gap at which the terminal periodically measures each RLM-RS may be extended.

### 2. RRM relaxation mechanism

The R17 standard has been introduced into the RRM relaxation mechanism. For terminals that are in a connected state and meet a static criteria, the RRM relaxation mechanism can be performed by the terminal. For example, the measurement gap at which the terminal periodically performs measurement may be extended.

In order to solve the above problems, the disclosure provides measurement methods and measurement apparatuses.

It is understandable that the communication system described in the embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

The measurement methods and measurement apparatuses in the disclosure are described in detail below in combination with the accompanying drawings.

As illustrated in FIG. 2, FIG. 2 is a flowchart of a measurement method provided by an embodiment of the disclosure. The measurement method may be performed by the terminal in the communication system shown in FIG. 1.

As illustrated in FIG. 2, the measurement method includes, but is not limited to, the following steps.

At step 201, a measurement value of a target measurement is obtained, in which the target measurement includes an RLM measurement and/or an RRM measurement.

In embodiments of the disclosure, the terminal may perform the target measurement and obtain the measurement value of the target measurement. The target measurement includes the RLM measurement and/or the RRM measurement.

Optionally, if the target measurement is the RLM measurement, the measurement value may be an SINR of a downlink RLM-RS, and if the target measurement is the RRM measurement, the measurement value may be a signal strength of a reference signal of a serving cell, for example, a reference signal receiving power (RSRP).

At step 202, a target event triggered by the terminal is determined based on the measurement value and reference information corresponding to the target measurement, in which the target event includes a relaxation entering event or a relaxation exiting event.

In the embodiments of the disclosure, the terminal determines the target event triggered by itself according to the measurement value and the reference information corresponding to the target measurement. The target event includes the relaxation entering event or the relaxation exiting event.

It should be understood that for different target measurements, the corresponding information may be different. The target event triggered by the terminal is determined according to the measurement value of the target measurement and the reference information corresponding to the target measurement, which can improve the accuracy and reliability of the target event determination result.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

As illustrated in FIG. 3, FIG. 3 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 3, the measurement method includes, but is not limited to, the following steps.

At step 301, a measurement value is obtained by performing a target measurement on a downlink reference signal of a serving cell of the terminal, in which the target measurement includes an RLM measurement and/or an RRM measurement.

In embodiments of the disclosure, the downlink reference signal may include a downlink reference signal of a primary serving cell and/or a downlink reference signal of at least one secondary serving cell.

In embodiments of the disclosure, if the target measurement is the RLM measurement, the downlink reference signal may be an RLM-RS, e.g., it may be an SSB-RS and/or a CSI-RS. The downlink RLM-RS of the serving cell of the terminal may be measured, and the measurement value obtained from the measurement may be an SINR.

In embodiments of the disclosure, if the target measurement is the RRM measurement, the downlink reference signal may be an SSB-RS and/or a CSI-RS. The downlink reference signal of the serving cell of the terminal may be measured, and the measurement value obtained from the measurement may be an RSRP.

At step 302, a target event triggered by the terminal is determined based on the measurement value and reference information sent by a network device, in which the target event includes a relaxation entering event or a relaxation exiting event.

In embodiments of the disclosure, the reference information may be sent by the network device. For example, the network device may configure the reference information via an RRC message.

In embodiments of the disclosure, the terminal may determine the target event triggered by the terminal according to the measurement value and the reference information sent by the network device. The target event includes the relaxation entering event or the relaxation exiting event.

In any of the embodiments of the disclosure, the reference information sent by the network device may be applied to a primary serving cell and/or a secondary serving cell.

As an example, the network device may send a set of reference information to the terminal. The unique set of reference information may be applicable to all serving cells connected to the terminal. That is, this set of reference information is shared by all serving cells connected to the terminal.

As another example, the network device may send multiple sets of reference information to the terminal, and different reference information may be applicable to different serving cells. For example, the network device may configure reference information respectively for a Master Cell Group (MCG) and a Secondary Cell Group (SCG) connected to the terminal. For example, a Master Node (MN) and a Secondary Node (SN) send the reference information to the terminal respectively. The reference information configured by the network device for the MCG is applicable to a primary cell (PCell). That is, when the terminal measures a reference signal of the PCell, it determines the target event triggered by the terminal according to the reference information configured by the network device for the MCG. Similarly, the reference information configured by the network device for the SCG is applicable to a secondary cell (SCell), such as a primary SCG cell (PScell). That is, when the terminal measures a reference signal of the SCell, it can determine the target event triggered by the terminal according to the reference information configured by the network device for the SCG.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

As illustrated in FIG. 4, FIG. 4 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 4, the measurement method includes, but is not limited to, the following steps.

At step 401, a measurement value of a target measurement is obtained.

The target measurement includes an RLM measurement and/or an RRM measurement. The measurement value includes at least one first RSRP obtained by measuring a downlink reference signal at least once within a target time period in the reference information corresponding to the target measurement. Or, the measurement value includes at least one first RSRP obtained by measuring at least one downlink reference signal within the target time period.

In an embodiment of the disclosure, the reference information configured by the network device may include the target time period. The terminal may measure a downlink reference signal at least once within the target time period and obtain at least one measurement value, i.e., at least one first RSRP in the disclosure.

As an example, the terminal may measure a downlink reference signal once within the target time period and obtain one first RSRP.

As another example, the terminal may measure a downlink reference signal for multiple times within the target time period and obtain multiple first RSRPs.

In embodiments of the disclosure, the terminal may measure at least one downlink reference signal within the target time period and obtain at least one first RSRP.

As an example, the terminal may measure one downlink reference signal at least once within the target time period and obtain at least one first RSRP.

As another example, the terminal may measure multiple downlink reference signals at least once within the target time period and obtain multiple f first RSRPs.

At step 402, a first difference between at least one first RSRP and a corresponding reference value is determined, in which the reference value corresponding to the first RSRP is obtained by the terminal before measuring the first RSRP.

In embodiments of the disclosure, each first RSRP has a corresponding reference value, the reference value and the first RSRP are in a one-to-one correspondence. The reference value corresponding to the first RSRP may be an RSRP obtained by the terminal before measuring the first RSRP. For example, the reference value corresponding to the first RSRP may be an RSRP obtained by the terminal in the most recent measurement before measuring the first RSRP.

In embodiments of the disclosure, for any first RSRP, an RSRP is obtained by the terminal before measuring the first RSRP, which is referred to as a reference value in the disclosure.

In embodiments of the disclosure, for each first RSRP, a difference between the first RSRP and a corresponding reference value is determined, which may be referred to as the first difference in the disclosure. For example, the corresponding reference value is subtracted from the first RSRP, and the resulting difference may be used as the first difference. Or, the first RSRP may be subtracted from the corresponding reference value, and the resulting difference may be used as the first difference.

At step 403, in response to the first difference corresponding to the at least one first RSRP being less than a first difference threshold in the reference information, it is determined that a target event triggered by the terminal is a relaxation entering event.

In embodiments of the disclosure, the reference information configured by the network device may also include the first difference threshold. The first difference threshold is used to represent a moving speed of the terminal, i.e., determining whether the terminal is in a stationary state or a low-mobility state.

For example, the network device may configure, via an RRC message, the target time period and the first difference threshold. Optionally, the target time period is represented by T_{SearchDeltaP}, and the first difference threshold is represented by S_{SearchDeltaP}.

In an embodiment of the disclosure, in response to the first differences corresponding respectively to all the first RSRPs being less than the first difference threshold in the reference information, it is determined that the target event triggered by the terminal is the relaxation entering event, i.e., it is determined that the terminal satisfies a relaxation entering criteria.

It is noted that in response to the first differences corresponding to all the first RSRPs being less than the first difference threshold, it indicates that the moving speed of the terminal is low. In this case, the relaxation entering event may also be referred to as a low-mobility event. Correspondingly, the relaxation entering criteria may also be referred to as low-mobility criteria.

In any of the embodiments of the disclosure, the reference value corresponding to each first RSRP may be updated. For example, the reference values may be updated according to the respective first RSRPs when the terminal performs cell switching. For each first RSRP, the reference value corresponding to the first RSRP may be updated to the first RSRP. Or, for each first RSRP, it is determined whether the difference obtained by subtracting the corresponding reference value from the first RSRP is greater than a third difference threshold. If the difference obtained by subtracting the corresponding reference value from the first RSRP is greater than the third difference threshold, the reference value corresponding to the first RSRP is updated according to the first RSRP, for example, updating the reference value corresponding to the first RSRP to the first RSRP. If the difference obtained by subtracting the corresponding reference value from the first RSRP is not greater than the third difference threshold, there is no need to update the reference value corresponding to the first RSRP. Or, it is determined whether the first difference of each first RSRP is less than the first difference threshold within the T_{SearchDeltaP}. If the first difference of a certain first RSRP is not less than the first difference threshold, the corresponding reference value may be updated according to the certain first RSRP, for example, updating the reference value corresponding to the certain first RSRP to the certain first RSRP. If the first difference of a certain first RSRP is less than the first difference threshold, there is no need to update the reference value corresponding to the certain first RSRP.

The third difference threshold is pre-set. For example, the third difference threshold may be configured by the network device or agreed upon by a protocol, which is not limited in the disclosure. For example, the third difference threshold may be 0.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

In any of the embodiments of the disclosure, an Event R1, including the relaxation entering event and the relaxation exiting event, may be agreed upon by a protocol.

As an example, the relaxation entering event (i.e., a low-mobility event) may be represented by Event R1-1, which is determined by a low-mobility criteria. If the difference between the measurement value (Srxlev) detected by the terminal within the T_{SearchDeltaP} and the reference value (Srxlev_{Ref}) is less than the S_{SearchDeltaP}, it indicates that the reference signal changes slightly, and in this case, the terminal is considered to be in a low-mobility state.

In Embodiment 1, when the low-mobility criteria is met, i.e., (Srxlev_{Ref}- Srxlev) < S_{SearchDeltaP}, the target event triggered by the terminal is determined to be the relaxation entering event or the low-mobility event.

The unit of Srxlev is dB, and the unit of Srxlev_{Ref} is dB.

The reference value is set to the measurement value when any of the following conditions is met.
(1) The terminal switches to a new serving cell.
(2) Srxlev-Srxlev_{Ref} > 0.
(3) The low-mobility criteria, i.e., (Srxlev_{Ref} - Srxlev) < S_{SearchDeltaP}, is not met within the T_{SearchDeltaP}.

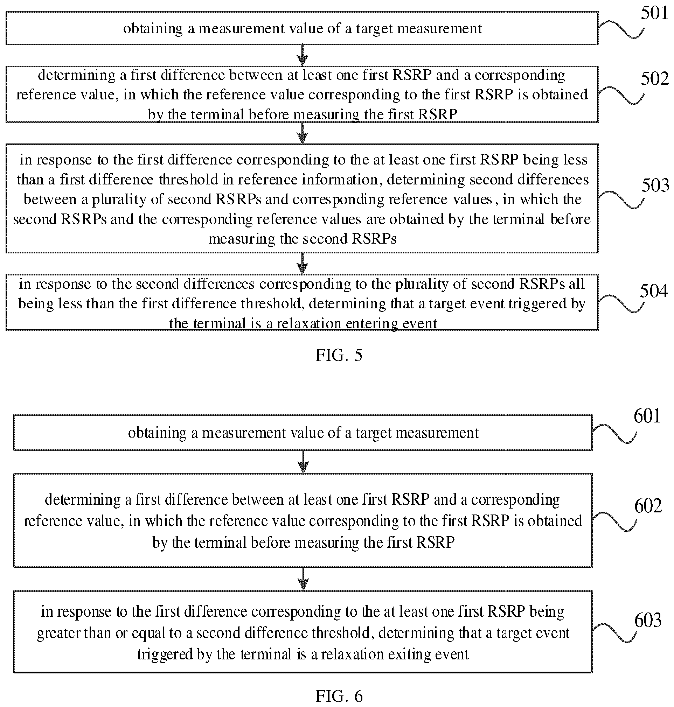

As illustrated in FIG. 5, FIG. 5 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 5, the measurement method includes, but is not limited to, the following steps.

At step 501, a measurement value of a target measurement is obtained.

The target measurement includes an RLM measurement and/or an RRM measurement. The measurement value includes at least one first RSRP obtained by measuring a downlink reference signal at least once within a target time period (T_{SearchDeltaP}) in the reference information corresponding to the target measurement. Or, the measurement value includes at least one first RSRP obtained by measuring at least one downlink reference signal within the T_{SearchDeltaP}. The measurement value further includes a plurality of second RSRPs obtained by measuring a downlink reference signal for multiple times within a preset duration (T1) after the T_{SearchDeltaP}. Or, the measurement value further includes a plurality of second RSRPs obtained by measuring a plurality of downlink reference signals within the T1.

In embodiments of the disclosure, step 501 may be realized in any of the implementations of the embodiments of the disclosure, which is not limited in the embodiments of the disclosure and will not be repeated herein.

In embodiments of the disclosure, the preset duration is set in advance. For example, the preset duration may be configured by the network device or agreed upon by a protocol, which is not limited in the disclosure. Optionally, the preset duration is represented by T1.

In embodiments of the disclosure, the terminal may also measure the downlink reference signal for multiple times within the T1 after the T_{SearchDeltaP} to obtain a plurality of measurement values, i.e., second RSRPs in the disclosure. Or, the terminal may measure the plurality of downlink reference signals at least once within the T1 to obtain a plurality of second RSRPs.

At step 502, a first difference between at least one first RSRP and a corresponding reference value is determined, in which the reference value corresponding to the first RSRP is obtained by the terminal before measuring the first RSRP.

In embodiments of the disclosure, step 502 may be realized in any of the implementations of the embodiments of the disclosure, which is not limited in the embodiments of the disclosure and will not be repeated herein.

At step 503, in response to the first difference corresponding to the at least one first RSRP being less than a first difference threshold in the reference information, second differences between the plurality of second RSRPs and corresponding reference values are determined, in which the second RSRPs and the corresponding reference values are obtained by the terminal before measuring the second RSRPs.

In embodiments of the disclosure, each second RSRP has a corresponding reference value, the reference value and the second RSRP are in a one-to-one correspondence. The reference value corresponding to the second RSRP may be an RSRP obtained by the terminal before measuring the second RSRP. For example, the reference value corresponding to the second RSRP may be an RSRP obtained by the terminal in the most recent measurement before measuring the second RSRP.

In embodiments of the disclosure, in response to determining that the first differences corresponding respectively to all the first RSRPs are less than the first difference threshold in the reference information, the terminal obtains the reference value corresponding to each second RSRP.

In embodiments of the disclosure, for each second RSRP, the terminal may determine the differences between the second RSRPs and the corresponding reference values, i.e., the second differences in the disclosure. For example, the difference obtained by subtracting the corresponding reference value from the second RSRP is used as the second difference. Or, the difference obtained by subtracting the second RSRP from the corresponding reference value is used as the second difference.

At step 504, in response to the second differences corresponding to the plurality of second RSRPs all being less than the first difference threshold, it is determined that a target event triggered by the terminal is a relaxation entering event.

In embodiments of the disclosure, in response to the second difference corresponding to each of the second RSRPs being less than the first difference threshold, it is determined that the target event is the relaxation entering event, i.e., it is determined that the terminal satisfies a relaxation entering criteria.

It should be noted that in response to all the second differences corresponding to the plurality of second RSRPs being less than the first difference threshold, it indicates that the terminal is moving at a low speed, and in this case, the relaxation entering event may also be referred to as a low-mobility event.

In any of the embodiments of the disclosure, the reference value corresponding to each first RSRP may be updated. For example, the corresponding reference value may be updated according to the first RSRP when the terminal performs cell switching. For each first RSRP, the reference value corresponding to the first RSRP may be updated to the first RSRP. Or, for each first RSRP, it is determined whether the difference obtained by subtracting the corresponding reference value from the first RSRP is greater than a third difference threshold. If the difference obtained by subtracting the corresponding reference value from the first RSRP is greater than the third difference threshold, the reference value corresponding to the first RSRP is updated according to the first RSRP, for example, updating the reference value corresponding to the first RSRP to the first RSRP. If the difference obtained by subtracting the corresponding reference value from the first RSRP is not greater than the third difference threshold, there is no need to update the reference value corresponding to the first RSRP. Or, it is determined whether the first difference of each first RSRP is less than the first difference threshold within the T_{SearchDeltaP}. If the first difference of a certain first RSRP is not less than the first difference threshold, the corresponding reference value may be updated according to the certain first RSRP, for example, updating the reference value corresponding to the certain first RSRP to the certain first RSRP. If the first difference of a certain first RSRP is less than the first difference threshold, there is no need to update the reference value corresponding to the certain first RSRP.

Similarly, the corresponding reference value may be updated according to each second RSRP when the terminal performs cell switching. For example, for each second RSRP, the reference value corresponding to the second RSRP is updated to the second RSRP. Or, for each second RSRP, it is determined whether the difference obtained by subtracting the corresponding reference value from the second RSRP is greater than the third difference threshold. In response to the difference obtained by subtracting the corresponding reference value from the second RSRP being greater than the third difference threshold, the corresponding reference value is updated according to the second RSRP, for example, updating the reference value corresponding to the second RSRP to the second RSRP. In response to the difference obtained by subtracting the corresponding reference value from the second RSRP being no greater than the third difference threshold, there is no need to update the reference value corresponding to the second RSRP. Or, it is determined whether the second difference of each second RSRP is less than the first difference threshold within the T1. If the second difference of a certain second RSRP is not less than the first difference threshold, the corresponding reference value may be updated according to the certain second RSRP, for example, updating the reference value corresponding to the certain second RSRP to the certain second RSRP. If the second difference of a certain second RSRP is less than the first difference threshold, there is no need to update the reference value corresponding to the certain second RSRP.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

In any of the embodiments of the disclosure, an Event R1, including the relaxation entering event and the relaxation exiting event, may be agreed upon by a protocol.

As an example, the relaxation entering event (i.e., a low-mobility event) may be represented by Event R1-1, which is determined by a low-mobility criteria. If the difference between the measurement value (Srxlev) detected by the terminal within the T_{SearchDeltaP} and the reference value (Srxlev_{Ref}) is less than the S_{SearchDeltaP}, it indicates that the reference signal changes slightly, and in this case, the terminal is considered to be in a low-mobility state.

It can be further determined whether the difference between the Srxlev detected by the terminal and the Srxlev_{Ref} within the T1 is less than the S_{SearchDeltaP}. If the difference is less than the S_{SearchDeltaP}, the target event triggered by the terminal is determined to be the relaxation entering event or the low-mobility event.

In Embodiment 2, the judgment condition of Event R1-1 is that within the T1, in the unit of T_{SearchDeltaP}, when the low-mobility criteria is met, i.e., (Srxlev_{Ref} - Srxlev) < S_{SearchDeltaP}, the target event triggered by the terminal is determined to be the relaxation entering event or the low-mobility event.

The unit of Srxlev is dB, and the unit of Srxlev_{Ref} is dB.

The reference value is set to the measurement value when any of the following conditions is met.
(1) The terminal switches to a new serving cell.
(2) Srxlev- Srxlev_{Ref} > 0.
(3) The low-mobility criteria, i.e., (Srxlev_{Ref} - Srxlev) < S_{SearchDeltaP}, is not met within the T_{SearchDeltaP}.

As illustrated in FIG. 6, FIG. 6 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 6, the measurement method includes, but is not limited to, the following steps.

At step 601, a measurement value of a target measurement is obtained.

The target measurement includes an RLM measurement and/or an RRM measurement. The measurement value includes at least one first RSRP obtained by measuring a downlink reference signal at least once within a target time period in the reference information corresponding to the target measurement. Or, the measurement value includes at least one first RSRP obtained by measuring at least one downlink reference signal within the target time period.

At step 602, a first difference between at least one first RSRP and a corresponding reference value is determined, in which the reference value corresponding to the first RSRP is obtained by the terminal before measuring the first RSRP.

In embodiments of the disclosure, steps 601 and 602 may be realized in any of the implementations of the embodiments of the disclosure, which is not limited in the embodiments of the disclosure and will not be repeated herein.

At step 603, in response to the first difference corresponding to the at least one first RSRP being greater than or equal to a second difference threshold in the reference information, it is determined that a target event triggered by the terminal is a relaxation exiting event.

In embodiments of the disclosure, in addition to the target time period (T_{SearchDeltaP}), the reference information sent by the network device may also include the second difference threshold. The second difference threshold is used to represent a moving speed of the terminal, i.e., it is used to determine whether or not the terminal is in a stationary state or a low-mobility state.

The second difference threshold may be the same as the first difference threshold or may be different from the first difference threshold. For example, the second difference threshold may be determined according to the first difference threshold and a compensation offset.

As an example, the network device may configure the target time period and the second difference threshold via an RRC message. Optionally, the target time period is represented by T_{SearchDeltaP}, and the second difference threshold is represented by S_{SearchDeltaP}'.

In an embodiment of the disclosure, in response to a first difference corresponding to at least one first RSRP being greater than or equal to the second difference threshold in the reference information, it is determined that the target event triggered by the terminal is the relaxation exiting event, i.e., it is determined that the terminal satisfies a relaxation exiting criteria.

It is noted that in response to a first difference corresponding to at least one first RSRP being no less than the second difference threshold, it indicates that the terminal is not moving at a low speed, in this case, the relaxation exiting event may be further referred to as a non-low-mobility event or a high-mobility event.

In any of the embodiments of the disclosure, the reference value corresponding to each first RSRP may be updated. For example, the corresponding reference value may be updated according to each first RSRP when the terminal performs cell switching. For example, for each first RSRP, the reference value corresponding to the first RSRP is updated to the first RSRP. Or, for each first RSRP, it is determined whether the difference obtained by subtracting the corresponding reference value from the first RSRP is greater than a third difference threshold. In response to the difference obtained by subtracting the corresponding reference value from the first RSRP being greater than the third difference threshold, the reference value corresponding to the first RSRP is updated according to the first RSRP, for example, updating the reference value corresponding to the first RSRP to the first RSRP. In response to the difference obtained by subtracting the corresponding reference value from the first RSRP being no greater than the third difference threshold, there is no need to update the reference value corresponding to the first RSRP. Or, it is determined whether the first difference of each first RSRP is less than the second difference threshold within the T_{searchDeltaP}. If the first difference of a certain first RSRP is less than the second difference threshold, the corresponding reference value may be updated according to the certain first RSRP, for example, updating the reference value corresponding to the certain first RSRP to the certain first RSRP. If the first difference of a certain first RSRP is not less than the second difference threshold, there is no need to update the reference value corresponding to the certain first RSRP.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

In any of the embodiments of the disclosure, an Event R1, including the relaxation entering event and the relaxation exiting event, may be agreed upon by a protocol.

As an example, the relaxation exiting event (i.e., a non-low-mobility event or a high-mobility event) may be represented by Event R1-2, which is determined by a low-mobility criteria. If the difference between the measurement value (Srxlev) detected by the terminal and the reference value (Srxlev_{Ref}) within the T_{SearchDeltaP} is greater than the S_{SearchDeltaP}', it indicates that the reference signal changes greatly, and in this case, it is considered that the terminal is not in a low-mobility state.

In Embodiment 3, when the condition is met, i.e., (Srxlev_{Ref} - Srxlev) > S_{SearchDeltaP}', the target event triggered by the terminal is determined to be the relaxation exiting event, the non-low-mobility event, or the high-mobility event.

The unit of Srxlev is dB, and the unit of Srxlev_{Ref} is dB.

The reference value is set to the measurement value when any of the following conditions is met.
(1) The terminal switches to a new serving cell.
(2) Srxlev- Srxlev_{Ref} > 0.
(3) The low-mobility criteria, i.e., (Srxlev_{Ref} - Srxlev) > S_{SearchDeltaP}', is not met within the T_{SearchDeltaP}.

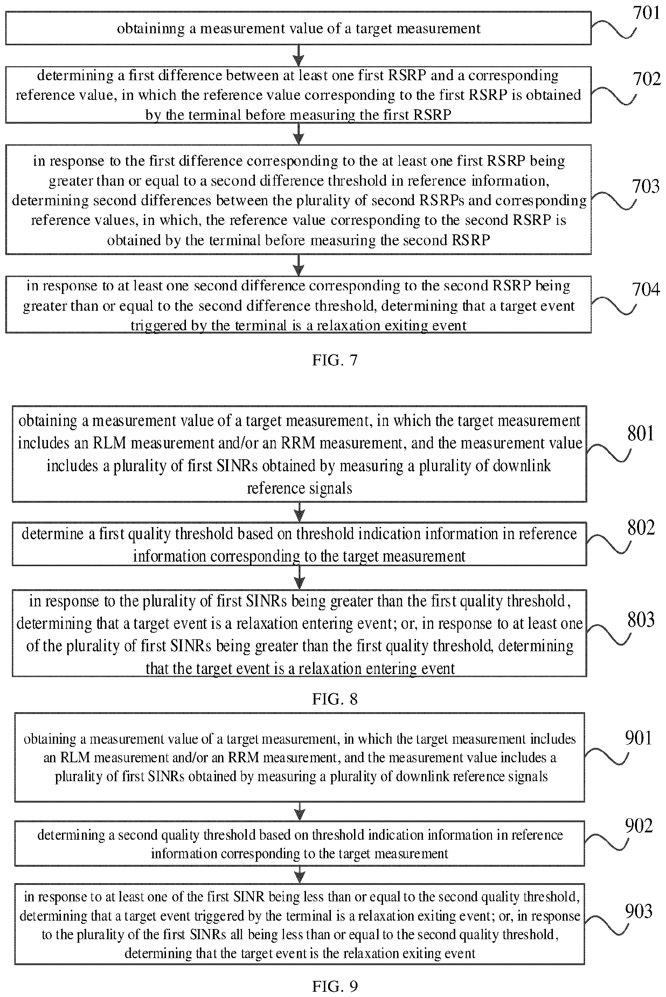

As illustrated in FIG. 7, FIG. 7 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 7, the measurement method includes, but is not limited to, the following steps.

At step 701, a measurement value of a target measurement is obtained.

The target measurement includes an RLM measurement and/or an RRM measurement. The measurement value includes at least one first RSRP obtained by measuring a downlink reference signal at least once within a target time period in the reference information corresponding to the target measurement. Or, the measurement value includes at least one first RSRP obtained by measuring at least one downlink reference signal within the target time period. The measurement value further includes a plurality of second RSRPs obtained by measuring a downlink reference signal for multiple times within a preset duration after the target time period. Or, the measurement value further includes a plurality of second RSRPs obtained by measuring a plurality of downlink reference signals within the preset duration.

At step 702, a first difference between at least one first RSRP and a corresponding reference value is determined, in which the reference value corresponding to the first RSRP is obtained by the terminal before measuring the first RSRP.

In embodiments of the disclosure, steps 701 and 702 may be realized in any of the implementations of the embodiments of the disclosure, which is not limited in the embodiments of the disclosure and will not be repeated herein.

At step 703, in response to a first difference corresponding to at least one first RSRP being greater than or equal to a second difference threshold in the reference information, second differences between the plurality of second RSRPs and corresponding reference values are determined, in which, the reference value corresponding to the second RSRP is obtained by the terminal before measuring the second RSRP.

An explanatory description of the reference value corresponding to the second RSRP can be referred to any embodiment of the disclosure and will not be repeated herein.

In embodiments of the disclosure, in response to there being at least one first RSRP having the corresponding first difference greater than or equal to the second difference threshold in the reference information, the reference value corresponding to each second RSRP can be further obtained, and the second difference between each second RSRP and the corresponding reference value can be determined.

At step 704, in response to a second difference corresponding to the at least one second RSRP being greater than or equal to the second difference threshold, it is determined that a target event triggered by the terminal is a relaxation exiting event.

In embodiments of the disclosure, in response to there being at least one second RSRP having the corresponding second difference greater than or equal to the second difference threshold in the reference information, the target event triggered by the terminal may be determined to be the relaxation exiting event, i.e., it is determined that the terminal satisfies a relaxation exiting criteria.

It is noted that in response to there being at least one second RSRP having the corresponding second difference no less than the second difference threshold, it indicates that the terminal is moving at a high speed. In this case, the relaxation exiting event may also be referred to as a non-low-mobility event or a high-mobility event.

In any of the embodiments of the disclosure, the reference value corresponding to each first RSRP may be updated. For example, the corresponding reference value may be updated according to each first RSRP when the terminal performs cell switching. For example, for each first RSRP, the reference value corresponding to the first RSRP is updated to the first RSRP. Or, for each first RSRP, it is determined whether the difference obtained by subtracting the corresponding reference value from the first RSRP is greater than a third difference threshold. In response to the difference obtained by subtracting the corresponding reference value from the first RSRP being greater than the third difference threshold, the reference value corresponding to the first RSRP is updated according to the first RSRP, for example, updating the reference value corresponding to the first RSRP to the first RSRP. In response to the difference obtained by subtracting the corresponding reference value from the first RSRP being no greater than the third difference threshold, there is no need to update the reference value corresponding to the first RSRP. Or, it is determined whether the first difference of each first RSRP is less than the second difference threshold within the target time period (T_{SearchDeltaP}). If the first difference of a certain first RSRP is less than the second difference threshold, the corresponding reference value may be updated according to the certain first RSRP, for example, updating the reference value corresponding to the certain first RSRP to the certain first RSRP. If the first difference of a certain first RSRP is not less than the first difference threshold, there is no need to update the reference value corresponding to the certain first RSRP.

Similarly, the corresponding reference value may be updated according to each second RSRP when the terminal performs cell switching. For example, for each second RSRP, the reference value corresponding to the second RSRP is updated to the second RSRP. Or, for each second RSRP, it is determined whether the difference obtained by subtracting the corresponding reference value from the second RSRP is greater than the third difference threshold. In response to the difference obtained by subtracting the corresponding reference value from the second RSRP being greater than the third difference threshold, the corresponding reference value is updated according to the second RSRP, for example, updating the reference value corresponding to the second RSRP to the second RSRP. In response to the difference obtained by subtracting the corresponding reference value from the second RSRP being no greater than the third difference threshold, there is no need to update the reference value corresponding to the second RSRP. Or, it is determined whether the second difference of each second RSRP is less than the second difference threshold within the preset duration (T1). If the second difference of a certain second RSRP is less than the second difference threshold, the corresponding reference value may be updated according to the certain second RSRP, for example, updating the reference value corresponding to the certain second RSRP to the certain second RSRP. If the second difference of a certain second RSRP is not less than the second difference threshold, there is no need to update the reference value corresponding to the certain second RSRP.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

In any of the embodiments of the disclosure, an Event R1, including the relaxation entering event and the relaxation exiting event, may be agreed upon by a protocol.

As an example, the relaxation exiting event (i.e., a non-low-mobility event or a high-mobility event) may be represented by Event R1-2, which is determined by a low-mobility criteria. If the difference between the measurement value (Srxlev) detected by the terminal and the reference value (Srxlev_{Ref}) within the T_{SearchDeltaP} is greater than the second difference threshold (S_{SearchDeltaP}'), it indicates that the reference signal changes greatly, and in this case, it is considered that the terminal is not in a low-mobility state.

Furthermore, it is determined whether the difference between the Srxlev detected by the terminal and the Srxlev_{Ref} within the T1 is greater than the S_{SearchDeltaP}'. If the difference is greater than the S_{SearchDeltaP}', it is determined that the target event triggered by the terminal is the relaxation exiting event or the non-low-mobility event.

In Embodiment 4, the judgment condition of Event R1-2 is that within the T1, in the unit of T_{SearchDeltaP}, if (Srxlev_{Ref} - Srxlev) > S_{SearchDeltaP}', the target event triggered by the terminal is determined to be the relaxation exiting event or the non-low-mobility event.

The unit of Srxlev is dB, and the unit of Srxlev_{Ref} is dB.

The reference value is set to the measurement value when any of the following conditions is met.
(1) The terminal switches to a new serving cell.
(2) Srxlev- Srxlev_{Ref} > 0.
(3) The low-mobility criteria, i.e., (Srxlev_{Ref} - Srxlev) > S_{SearchDeltaP}', is not met within the T_{SearchDeltaP}.

As illustrated in FIG.8, FIG. 8 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 8, the measurement method includes, but is not limited to, the following steps.

At step 801, a measurement value of a target measurement is obtained, in which the target measurement includes an RLM measurement and/or an RRM measurement, and the measurement value includes a plurality of first SINRs obtained by measuring a plurality of downlink reference signals.

In embodiments of the disclosure, step 801 may be realized in any of the implementations of the embodiments of the disclosure, which is not limited in the embodiments of the disclosure and will not be repeated herein.

In embodiments of the disclosure, the terminal may measure a plurality of downlink reference signals at least once and obtain a plurality of measurement values, i.e., a plurality of first SINRs in the disclosure.

At step 802, a first quality threshold is determined based on threshold indication information in reference information corresponding to the target measurement.

In embodiments of the disclosure, the reference information sent by a network device includes the threshold indication information. For example, the network device may configure, via an RRC message, the threshold indication information.

In embodiments of the disclosure, the terminal may determine the first quality threshold according to the threshold indication information. The first quality threshold is used to represent a reference signal quality.

In a possible implementation of embodiments of the disclosure, the threshold indication information may include a first offset. Optionally, the first offset is represented by offset1.

In embodiments of the disclosure, the terminal may determine the first quality threshold according to the first offset. For example, the first quality threshold is obtained by adding the first offset with a first configuration threshold. The first configuration threshold may be Qᵢₙ or Qₒᵤₜ corresponding to the RLM measurement in the related art.

In another possible implementation of embodiments of the disclosure, the threshold indication information may include a target threshold. The terminal may determine the first quality threshold according to the target threshold. For example, the target threshold can be used as the first quality threshold.

At step 803, in response to the plurality of first SINRs being greater than the first quality threshold, it is determined that the target event is a relaxation entering event; or, in response to at least one of the plurality of first SINRs being greater than the first quality threshold, it is determined that the target event is a relaxation entering event.

In a possible implementation of embodiments of the disclosure, in response to the plurality of first SINRs being greater than the first quality threshold, it is determined that the target event triggered by the terminal is the relaxation entering event, i.e., it is determined that the terminal satisfies a relaxation entering criteria.

In another possible implementation of embodiments of the disclosure, in response to at least one of the plurality of first SINRs being greater than the first quality threshold, it is determined that the target event triggered by the terminal is the relaxation entering event, i.e., it is determined that the terminal satisfies the relaxation entering criterion.

It is noted that if the first SINR is greater than the first quality threshold, it is determined that the signal quality of the reference signal is good, and the relaxation entering event can also be referred to as a good cell signal quality event.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

In any of the embodiments of the disclosure, an Event R2, including the relaxation entering event and the relaxation exiting event, may be agreed upon by a protocol.

As an example, the relaxation entering event (i.e., a good cell signal quality event) is represented by Event R2-1, which is determined by a good signal quality criteria. If a serving cell is configured with multiple reference signals (RSs), each RS is measured and the SINR corresponding to the RS obtained from the measurement is compared with a threshold to determine whether the terminal satisfies the good signal quality criteria.

In embodiment 5, if all RSs satisfy the condition that the measurement value (SINR_{measured})> the first quality threshold (Qₒᵤₜ + Offset 1), it is determined that the terminal satisfies the good signal quality criteria and the target event triggered by the terminal is the relaxation entering event or the good cell signal quality event.

In embodiment 6, if any RS satisfies the condition that SINRmeasured > Qₒᵤₜ + Offset1, it is determined that the terminal satisfies the good signal quality criteria and the target event triggered by the terminal is the relaxation entering event or the good cell signal quality event.

As illustrated in FIG. 9, FIG. 9 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 9, the measurement method includes, but is not limited to, the following steps.

At step 901, a measurement value of a target measurement is obtained, in which the target measurement includes an RLM measurement and/or an RRM measurement, and the measurement value includes a plurality of first SINRs obtained by measuring a plurality of downlink reference signals.

In embodiments of the disclosure, step 901 may be realized in any of the implementations of the embodiments of the disclosure, which is not limited in the embodiments of the disclosure and will not be repeated herein.

At step 902, a second quality threshold is determined based on threshold indication information in reference information corresponding to the target measurement.

In embodiments of the disclosure, the reference information sent by a network device includes the threshold indication information. For example, the network device may configure, via an RRC message, the threshold indication information.

In embodiments of the disclosure, the terminal may determine the second quality threshold according to the threshold indication information. The second quality threshold is used to represent a reference signal quality.

In a possible implementation of embodiments of the disclosure, the threshold indication information may include a second offset. Optionally, the second offset is represented by offset2. The terminal may determine the second quality threshold according to the second offset. For example, the second quality threshold is obtained by adding the second offset with a second configuration threshold.

The second configuration threshold may be a Qᵢₙ or Qₒᵤₜ corresponding to the RLM measurement in the related art.

The second offset and the first offset may be identical or different, which is not limited in the disclosure.

The first configuration threshold may be the same as the second configuration threshold, or the first configuration threshold may be different from the second configuration threshold, which is not limited in the disclosure.

It is noted that the first offset configured by the network device for determining whether a relaxation entering event is triggered may be different from the second offset for determining whether a relaxation exiting event is triggered. In this case, the first quality threshold and the second quality threshold are different even if the first configuration threshold and the second configuration threshold are identical.

In another possible implementation of embodiments of the disclosure, the threshold indication information may include a target threshold. The terminal may determine the second quality threshold according to the target threshold. For example, the target threshold is used as the second quality threshold.

At step 903, in response to at least one of the plurality of first SINRs being less than or equal to the second quality threshold, it is determined that the target event triggered by the terminal is the relaxation exiting event; or, in response to the plurality of first SINRs all being less than or equal to the second quality threshold, it is determined that the target event is the relaxation exiting event.

In embodiments of the disclosure, in response to at least one of the plurality of first SINRs being less than or equal to the second quality threshold, it is determined that the target event triggered by the terminal is the relaxation exiting event, i.e., it is determined that the terminal satisfies a relaxation exiting criteria. Alternatively, in response to each first SINR being less than or equal to the second quality threshold, it is determined that the target event triggered by the terminal is the relaxation exiting event, i.e., it is determined that the terminal satisfies the relaxation exiting criteria.

It is noted that in response to the first SINR being less than or equal to the second quality threshold, it is determined that the signal quality of the reference signal is poor. In this case, the relaxation exiting event can also be referred to as a non-good cell signal quality event or a poor cell signal quality event.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

In any of the embodiments of the disclosure, an Event R2, including the relaxation entering event and the relaxation exiting event, may be agreed upon by a protocol.

As an example, the relaxation exiting event (i.e., a non-good cell signal quality event or a poor cell signal quality event) is represented by Event R2-2, which is determined by a good signal quality criteria. If a serving cell is configured with multiple RSs, each RS is measured and the SINR corresponding to the RS obtained from the measurement is compared with a threshold to determine whether the terminal satisfies the good signal quality criteria.

In embodiment 7, if any RS satisfies the condition that the measurement value (SINR_{measured}) < the second quality threshold (Qₒᵤₜ + Offset2), it is determined that the terminal does not satisfy the good signal quality criteria and the target event triggered by the terminal can be the relaxation exiting event, the non-good cell signal quality event or the poor cell signal quality event.

In embodiment 8, if all RSs satisfy the condition that SINRmeasured < Qₒᵤₜ + Offset2, it is determined that the terminal does not satisfy the good signal quality criteria and the target event triggered by the terminal is the relaxation exiting event, the non-good cell signal quality event or the poor cell signal quality event.

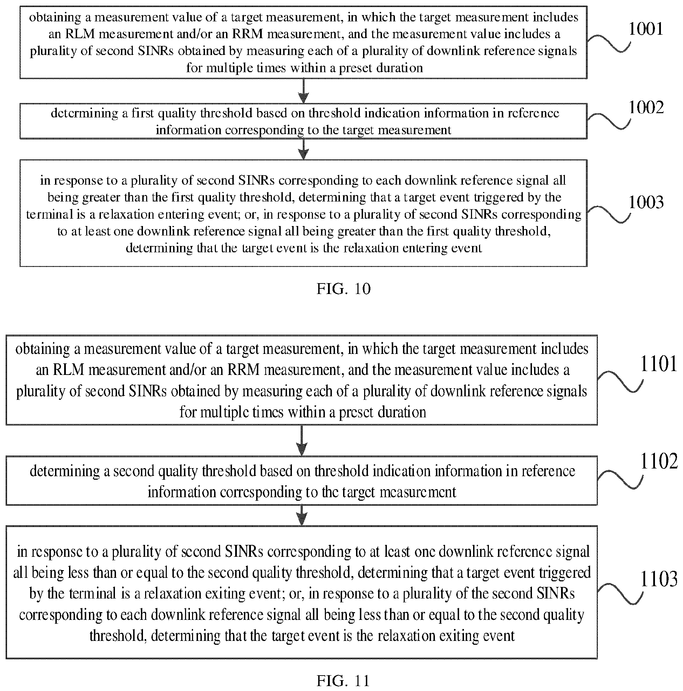

As illustrated in FIG. 10, FIG. 10 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 10, the measurement method includes, but is not limited to, the following steps.

At step 1001, a measurement value of a target measurement is obtained, in which the target measurement includes an RLM measurement and/or an RRM measurement, and the measurement value includes a plurality of second SINRs obtained by measuring each of a plurality of downlink reference signals for multiple times within a preset duration.

In embodiments of the disclosure, step 1001 may be realized in any of the implementations of the embodiments of the disclosure, which is not limited in the embodiments of the disclosure and will not be repeated herein.

In embodiments of the disclosure, an explanatory description of the preset duration can be referred to any embodiment of the disclosure and will not be repeated herein.

In embodiments of the disclosure, the terminal may measure each of the plurality of downlink reference signals for multiple times within the preset duration, so that the terminal may obtain, for each of the plurality of downlink reference signals, a plurality of measurement values corresponding to the downlink reference signal, i.e., a plurality of second SINRs in the disclosure.

At step 1002, a first quality threshold is determined based on threshold indication information in reference information corresponding to the target measurement.

In embodiments of the disclosure, step 1002 may be realized in any of the implementations of the embodiments of the disclosure, which is not limited in the embodiments of the disclosure and will not be repeated herein.

At step 1003, in response to the plurality of second SINRs corresponding to each downlink reference signal all being greater than the first quality threshold, it is determined that a target event triggered by the terminal is a relaxation entering event; or, in response to the plurality of second SINRs corresponding to at least one downlink reference signal all being greater than the first quality threshold, it is determined that the target event is the relaxation entering event.

In embodiments of the disclosure, in response to the plurality of second SINRs corresponding to each downlink reference signal all being greater than the first quality threshold, it is determined that the target event triggered by the terminal is the relaxation entering event. Or, in response to the plurality of second SINRs corresponding to at least one downlink reference signal all being greater than the first quality threshold, it is determined that the target event triggered by the terminal is the relaxation entering event, i.e., it is determined that the terminal satisfies a relaxation entering criteria.

It is noted that in response to the second SINR being greater than the first quality threshold, it is determined that the downlink reference signal has a good signal quality. In this case, the relaxation entering event may also be referred to as a good cell signal quality event.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

In any of the embodiments of the disclosure, an Event R2, including the relaxation entering event and the relaxation exiting event, may be agreed upon by a protocol.

As an example, the relaxation entering event (i.e., a good cell signal quality event) is represented by Event R2-1, which is determined by a good signal quality criteria. If a serving cell is configured with multiple RSs, each RS is measured and the SINR corresponding to the RS obtained from the measurement is compared with a threshold to determine whether the terminal satisfies the good signal quality criteria.

It can be further determined whether the terminal satisfies the good signal quality criteria within the T1.

In embodiment 9, within the T1, if all RSs satisfy the condition that the measurement value (SINR_{measured}) > the first quality threshold (Qₒᵤₜ + Offset 1), it is determined that the terminal satisfies the good signal quality criteria and the target event triggered by the terminal is the relaxation entering event or the good cell signal quality event.

In embodiment 10, within the T1, if any RS satisfies the condition that SINR_{measured} > Qₒᵤₜ + Offset1, it is determined that the terminal satisfies the good signal quality criteria and the target event triggered by the terminal can be the relaxation entering event or the good cell signal quality event.

As illustrated in FIG. 11, FIG. 11 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 11, the measurement method includes, but is not limited to, the following steps.

At step 1101, a measurement value of a target measurement is obtained, in which the target measurement includes an RLM measurement and/or an RRM measurement, and the measurement value includes a plurality of second SINRs obtained by measuring each of a plurality of downlink reference signals for multiple times within a preset duration.

In embodiments of the disclosure, step 1101 may be realized in any of the implementations of the embodiments of the disclosure, which is not limited in the embodiments of the disclosure and will not be repeated herein.

At step 1102, a second quality threshold is determined based on threshold indication information in reference information corresponding to the target measurement.

In embodiments of the disclosure, step 1102 may be realized in any of the implementations of the embodiments of the disclosure, which is not limited in the embodiments of the disclosure and will not be repeated herein.

At step 1103, in response to a plurality of second SINRs corresponding to at least one downlink reference signal all being less than or equal to the second quality threshold, it is determined that a target event triggered by the terminal is a relaxation exiting event; or, in response to a plurality of the second SINRs corresponding to each downlink reference signal all being less than or equal to the second quality threshold, it is determined that the target event is the relaxation exiting event.

In embodiments of the disclosure, in response to the plurality of second SINRs corresponding to at least one downlink reference signal all being less than or equal to the second quality threshold, it is determined that the target event triggered by the terminal is the relaxation exiting event. Or, in response to the plurality of the second SINRs corresponding to each downlink reference signal all being less than or equal to the second quality threshold, it is determined that the target event triggered by the terminal is the relaxation exiting event, i.e., it is determined that the terminal satisfies a relaxation exiting criteria.

It is noted that in response to the second SINR being less than or equal to the second quality threshold, it is determined that the signal quality of the reference signal is poor. In this case, the relaxation exiting event can also be referred to as a non-good cell signal quality event or a poor cell signal quality event.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

In any of the embodiments of the disclosure, an Event R2, including the relaxation entering event and the relaxation exiting event, may be agreed upon by a protocol.

As an example, the relaxation exiting event (i.e., a non-good cell signal quality event or a poor cell signal quality event) is represented by Event R2-2, which is determined by a good signal quality criteria. If a serving cell is configured with multiple RSs, each RS is measured and the SINR corresponding to the RS obtained from the measurement is compared with a threshold to determine whether the terminal satisfies the good signal quality criteria.

It can be further determined whether the terminal satisfies the good signal quality criteria within the T1.

In embodiment 11, within the T1, if any RS satisfies the condition that the measurement value (SINR_{measured}) < the second quality threshold (Qₒᵤₜ + Offset2), it is determined that the terminal does not satisfy the good signal quality criteria and the target event triggered by the terminal can be the relaxation exiting event, the non-good cell signal quality event or the poor cell signal quality event.

In embodiment 12, within the T1, if all RSs satisfy the condition that SINR_{measured} < Qₒᵤₜ + Offset2, it is determined that the terminal does not satisfy the good signal quality criteria and the target event triggered by the terminal is the relaxation exiting event, the non-good cell signal quality event or the poor cell signal quality event.

It should be noted that in each of the above embodiments, one of the low-mobility criteria and the good signal quality criteria are illustrated as an example. In practice, both the low mobility criteria and the good signal quality criteria may be configured. For example, both Event R1 and Event R2 are configured.

As an example, when the target event is the relaxation entering event, two embodiments are satisfied at the same time. One embodiment may be the embodiment corresponding to FIG. 4 or FIG. 5, and the other embodiment may be the embodiment corresponding to FIG. 8 or FIG. 10.

In a possible implementation, the reference information may include a target time period, a first difference threshold, and threshold indication information.

In an example, the measurement value may include at least one first RSRP obtained by measuring a downlink reference signal at least once within the target time period, or, the measurement value may include at least one first RSRP obtained by measuring at least one downlink reference signal within the target time period. The measurement value further includes a plurality of first SINRs obtained by measuring a plurality of downlink reference signals.

A first difference between the at least one first RSRP and the corresponding reference value is determined. In response to the first differences corresponding to the at least one first RSRP being less than the first difference threshold in the reference information, it is determined that the terminal satisfies the low-mobility criteria.

If the terminal satisfies the low-mobility criteria, it may be further determined whether the terminal satisfies the good cell signal quality criteria. For example, in response to the plurality of first SINRs all being greater than a first quality threshold (which is determined according to the threshold indication information), it is determined that the terminal satisfies the good cell signal quality criteria. Or, in response to at least one first SINR being greater than the first quality threshold, it is determined that the terminal satisfies the good cell signal quality criteria.

If the terminal satisfies both the low-mobility criteria and the good cell signal quality criteria, it is determined that the target event is the relaxation entering event.

In another example, the measurement value may include at least one first RSRP obtained by measuring a downlink reference signal at least once within the target time period, or, the measurement value may include at least one first RSRP obtained by measuring at least one downlink reference signal within the target time period. The measurement value may also include a plurality of second SINRs obtained by measuring each of a plurality of downlink reference signals for multiple times within the preset duration.

A first difference between the at least one first RSRP and the corresponding reference value is determined. In response to the first difference corresponding to the at least one first RSRP being less than the first difference threshold in the reference information, it is determined that the terminal satisfies the low-mobility criteria.

If the terminal satisfies the low-mobility criteria, it may be further determined whether the terminal satisfies the good cell signal quality criteria. For example, in response to a plurality of second SINRs corresponding to each downlink reference signal all being greater than a first quality threshold (which is determined according to the threshold indication information), it is determined that the terminal satisfies the good cell signal quality criteria. Or, in response to a plurality of second SINRs corresponding to at least one downlink reference signal all being greater than the first quality threshold, it is determined that the terminal satisfies the good cell signal quality criteria.

If the terminal satisfies both the low-mobility criteria and the good cell signal quality criteria, it is determined that the target event is the relaxation entering event.

In yet another example, the measurement value includes at least one first RSRP obtained by measuring a downlink reference signal at least once within the target time period (T_{SearchDeltaP}), or, the measurement value includes at least one first RSRP obtained by measuring at least one downlink reference signal within the T_{SearchDeltaP}. The measurement value also includes a plurality of second RSRPs obtained by measuring a downlink reference signal for multiple times within the preset duration (T1) after the T_{SearchDeltaP}, or, the measurement value may include a plurality of second RSRPs obtained by measuring a plurality of downlink reference signals within the T1. In addition, the measurement value further includes a plurality of first SINRs obtained by measuring a plurality of downlink reference signals.

A first difference between the at least one first RSRP and the corresponding reference value may be determined. In response to the first difference corresponding to the at least one first RSRP being less than the first difference threshold in the reference information, second differences between the plurality of second RSRPs and corresponding reference values may be determined. In response to the second differences corresponding to the plurality of second RSRPs all being less than the first difference threshold, it is determined that the terminal satisfies the low-mobility criteria.

If the terminal satisfies the low-mobility criteria, it may be further determined whether the terminal satisfies the good cell signal quality criteria. For example, in response to the plurality of first SINRs all being greater than a first quality threshold (which is determined according to the threshold indication information), it is determined that the terminal satisfies the good cell signal quality criteria. Or, in response to at least one first SINR being greater than the first quality threshold, it is determined that the terminal satisfies the good cell signal quality criteria.

If the terminal satisfies both the low-mobility criteria and the good cell signal quality criteria, it is determined that the target event is the relaxation entering event.

In yet another example, the measurement value includes at least one first RSRP obtained by measuring a downlink reference signal at least once within the T_{SearchDeltaP}, or, the measurement value includes at least one first RSRP obtained by measuring at least one downlink reference signal within the T_{SearchDeltaP}. Further, the measurement value also includes a plurality of second RSRPs obtained by measuring a downlink reference signal for multiple times within the T1 after the T_{SearchDeltaP}, or, the measurement value may include a plurality of second RSRPs obtained by measuring a plurality of downlink reference signals within the T1. In addition, the measurement value further includes a plurality of second SINRs obtained by measuring each of a plurality of downlink reference signals for multiple times within the T1.

A first difference between the at least one first RSRP and the corresponding reference value may be determined. In response to the first difference corresponding to the at least one first RSRP being less than the first difference threshold in the reference information, second differences between the plurality of second RSRPs and corresponding reference values may be determined. In response to the second differences corresponding to the plurality of second RSRPs all being less than the first difference threshold, it is determined that the terminal satisfies the low-mobility criteria.

If the terminal satisfies the low-mobility criteria, it may be further determined whether the terminal satisfies the good cell signal quality criteria. For example, in response to a plurality of second SINRs corresponding to each downlink reference signal all being greater than the first quality threshold, it is determined that the terminal satisfies the good cell signal quality criteria. Or, in response to a plurality of second SINRs corresponding to at least one downlink reference signal all being greater than the first quality threshold, it is determined that the terminal satisfies the good cell signal quality criteria.

If the terminal satisfies both the low-mobility criteria and the good cell signal quality criteria, it is determined that the target event is the relaxation entering event.

For example, when Event R1-1 (embodiment 1 or embodiment 2) and Event R2-1 (embodiment 5, embodiment 6, embodiment 9 or embodiment 10) are both satisfied, it is determined that the target event triggered by the terminal is the relaxation entering event, which may be a good cell signal quality event or a low-mobility event that is represented by Event R3-1.

As another example, if the target event is the relaxation exiting event, two embodiments are satisfied at the same time or only one of the two embodiments is satisfied. One embodiment may be the embodiment corresponding to FIG. 6 or FIG. 7, and the other embodiment may be the embodiment corresponding to FIG. 9 or FIG. 11.

In a possible implementation, the reference information may include a target time period, a second difference threshold, and threshold indication information.

In an example, the measurement value may include at least one first RSRP obtained by measuring a downlink reference signal at least once within the target time period, or, the measurement value may include at least one first RSRP obtained by measuring at least one downlink reference signal within the target time period. The measurement value further includes a plurality of first SINRs obtained by measuring a plurality of downlink reference signals.

A first difference between the at least one first RSRP and the corresponding reference value is determined. In response to the first difference corresponding to the at least one first RSRP being greater than or equal to the second difference threshold in the reference information, it is determined that the terminal does not satisfy the low-mobility criteria.

A second quality threshold is determined according to the threshold indication information. In response to at least one first SINR being less than or equal to the second quality threshold, it is determined that the terminal does not satisfy the good cell signal quality criteria. Or, in response to the plurality of first SINRs all being less than or equal to the second quality threshold, it is determined that the terminal does not satisfy the good cell signal quality criteria.

If the terminal does not satisfy the low-mobility criteria, and/or, the terminal does not satisfy the good cell signal quality criteria, it is determined that the target event is the relaxation exiting event.

In another example, the measurement value includes at least one first RSRP obtained by measuring a downlink reference signal at least once within the target time period, or, the measurement value includes at least one first RSRP obtained by measuring at least one downlink reference signal within the target time period. The measurement value further includes a plurality of second SINRs obtained by measuring each of a plurality of downlink reference signals for multiple times within the preset duration.

A first difference between at least one first RSRP and the corresponding reference value is determined. In response to there being at least one first RSRP having the corresponding first difference greater than or equal to the second difference threshold in the reference information, it is determined that the terminal does not satisfy the low-mobility criteria.

A second quality threshold is determined according to the threshold indication information. In response to a plurality of second SINRs corresponding to at least one downlink reference signal all being less than or equal to the second quality threshold, it is determined that the terminal does not satisfy the good cell signal quality criteria. Or, in response to a plurality of second SINRs corresponding to each downlink reference signal all being less than or equal to the second quality threshold, it is determined that the terminal does not satisfy the good cell signal quality criteria.

If the terminal does not satisfy the low-mobility criteria, and/or, the terminal does not satisfy the good cell signal quality criteria, it is determined that the target event is the relaxation exiting event.

In yet another example, the measurement value includes at least one first RSRP obtained by measuring a downlink reference signal at least once within the target time period, or, the measurement value includes at least one first RSRP obtained by measuring at least one downlink reference signal within the target time period. Further, the measurement value also includes a plurality of second RSRPs obtained by measuring a downlink reference signals for multiple times within the preset duration after the target time period, or, the measurement value also includes a plurality of second RSRPs obtained by measuring a plurality of downlink reference signals within the preset duration. The measurement value also includes a plurality of first SINRs obtained by measuring a plurality of downlink reference signals.

A first difference between the at least one first RSRP and the corresponding reference value may be determined. In response to there being at least one first RSRP having the corresponding first difference greater than or equal to the second difference threshold, second differences between the plurality of second RSRPs and corresponding reference values are determined. In response to a second difference corresponding to at least one second RSRP being greater than or equal to the second difference threshold, it is determined that the terminal does not satisfy the low-mobility criteria.

A second quality threshold may also be determined according to the threshold indication information. In response to at least one first SINR being less than or equal to the second quality threshold, it is determined that the terminal does not satisfy the good cell signal quality criteria. Or, in response to the plurality of first SINRs all being less than or equal to the second quality threshold, it is determined that the terminal does not satisfy the good cell signal quality criteria.

If the terminal does not satisfy the low-mobility criteria, and/or, the terminal does not satisfy the good cell signal quality criteria, it is determined that the target event is the relaxation exiting event.

In yet another example, the measurement value includes at least one first RSRP obtained by measuring a downlink reference signal at least once within the target time period, or, the measurement value includes at least one first RSRP obtained by measuring at least one downlink reference signal within the target time period. Further, the measurement value also includes a plurality of second RSRPs obtained by measuring a downlink reference signals for multiple times within the preset duration after the target time period, or, the measurement value also includes a plurality of second RSRPs obtained by measuring a plurality of downlink reference signals within the preset duration. The measurement value also includes a plurality of second SINRs obtained by measuring each of a plurality of downlink reference signals for multiple times within the preset duration.

A first difference between the at least one first RSRP and the corresponding reference value may be determined. In response to there being at least one first RSRP having the corresponding first difference greater than or equal to the second difference threshold, second differences between the plurality of second RSRPs and corresponding reference values are determined. In response to a second difference corresponding to at least one second RSRP being greater than or equal to the second difference threshold, it is determined that the terminal does not satisfy the low-mobility criteria.

A second quality threshold is determined according to the threshold indication information. In response to a plurality of second SINRs corresponding to at least one downlink reference signal all being less than or equal to the second quality threshold, it is determined that the terminal does not satisfy the good cell signal quality criteria. Or, in response to a plurality of second SINRs corresponding to each downlink reference signal all being less than or equal to the second quality threshold, it is determined that the terminal does not satisfy the good cell signal quality criteria.

If the terminal does not satisfy the low-mobility criteria, and/or, the terminal does not satisfy the good cell signal quality criteria, it is determined that the target event is the relaxation exiting event.

For example, when one of Event R1-2 (embodiment 3 or embodiment 4) and Event R2-2 (embodiment 7, embodiment 8, embodiment 11 or embodiment 12) is satisfied, it is determined that the target event triggered by the terminal is the relaxation exiting event, which may be a non-good cell signal quality event (i.e., a poor cell signal quality event) and/or a non-low-mobility event (i.e., a high-mobility event) that is represented by Event R3-2.

In any of the embodiments of the disclosure, the network device may configure the reference information corresponding to the low-mobility criteria via an RRC message.

As an example, the reference information corresponding to the low-mobility criteria includes: a target time period (T_{SearchDeltaP}), a first difference threshold (S_{SearchDeltaP}) and/or a second difference threshold (S_{SearchDeltaP}').

For the low-mobility criteria, the measurement value obtained by the terminal in the measurement may be L3-RSRP.

As an example, the reference information corresponding to the good cell signal quality criteria may include threshold indication information (e.g., Offset1 and/or Offset2).

For the good cell signal quality criteria, the measurement value obtained by the terminal in the measurement is L1-SINR.

In any of the embodiments of the disclosure, the network device may configure at least one event for an RLM measurement relaxation and/or an RRM measurement relaxation.

As an example, the network device can configure Event R1 for the RRM measurement relaxation. When the relaxation entering criteria corresponding to Event R1 is satisfied, the RRM relaxation mechanism is adopted. The network device can configure Event R2 for the RLM measurement relaxation. When the relaxation entering criteria corresponding to Event R2 is satisfied, the RLM relaxation mechanism is adopted. The network device may configure Event R1+Event R2 for the RLM measurement relaxation. For example, when the relaxation entering criterion corresponding to Event R2 and Event R1 are satisfied, the RRM relaxation mechanism is adopted. The network device may configure Event R3 (Event R3-1 or Event R3-2) for the RLM measurement relaxation or the RRM measurement relaxation.

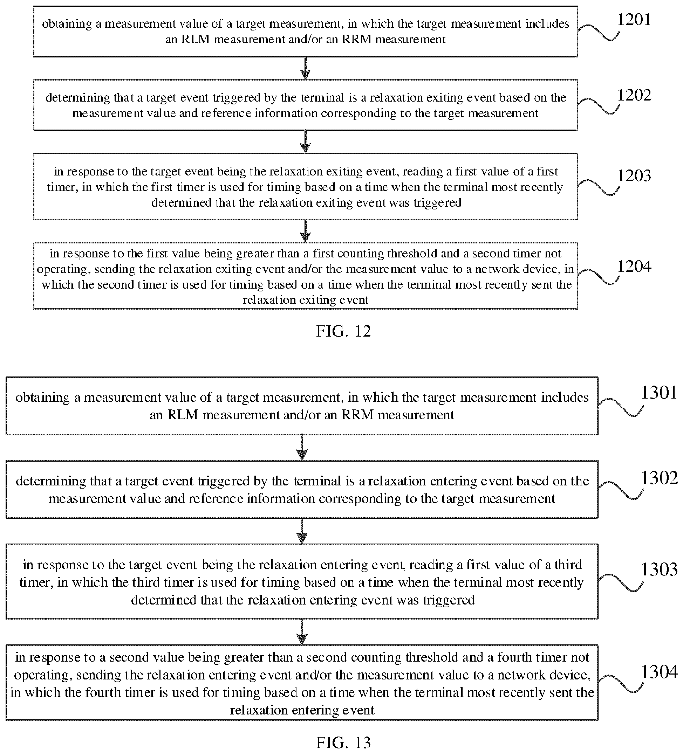

As illustrated in FIG. 12, FIG. 12 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 12, the measurement method includes, but is not limited to, the following steps.

At step 1201, a measurement value of a target measurement is obtained, in which the target measurement includes an RLM measurement and/or an RRM measurement.

At step 1202, it is determined, based on the measurement value and reference information corresponding to the target measurement, that a target event triggered by the terminal is a relaxation exiting event.

Steps 1201 and 1202 may be realized in the manner in any of the embodiments of FIG. 2, FIG. 3, FIG. 6, and FIG. 9 described above in the disclosure, which is not limited in the embodiments of the disclosure and will not be repeated.

At step 1203, in response to the target event being the relaxation exiting event, a first value of a first timer is read, in which the first timer is used for timing based on a time when the terminal most recently determined that the relaxation exiting event was triggered.

In the embodiment of the disclosure, the first timer is used for timing based on a time when the terminal determined the last time that the relaxation exiting event was triggered. That is, the first timer starts timing based on a time when the terminal most recently determined that a relaxation exiting criteria is satisfied.

In embodiments of the disclosure, if the target event is the relaxation exiting event, the value of the first timer is read, which is noted as the first value in the disclosure.

At step 1204, in response to the first value being greater than a first counting threshold and a second timer not operating, the relaxation exiting event and/or the measurement value is sent to a network device, in which the second timer is used for timing based on a time when the terminal most recently sent the relaxation exiting event.

In embodiments of the disclosure, the second timer is used for timing based on a time when the terminal sent the relaxation exiting event the last time. That is, the second timer is used for timing based on the relaxation exiting event most recently triggered by the terminal and a time when the terminal reports the relaxation exiting event to the network device. The second timer starts timing when the terminal reports the relaxation exiting event to the network device, and stops timing after a first preset duration after the starting time.

In embodiments of the disclosure, the first counting threshold is pre-set. For example, the first counting threshold may be configured by the network device or may be agreed upon by a protocol, which is not limited in the disclosure.

In embodiments of the disclosure, in order to prevent the terminal from frequently reporting information to the network device, in the disclosure, in the case where the first value of the first timer is greater than the first counting threshold (i.e., the first timer is expired) and the second timer is not operating, the terminal sends the relaxation exiting event and/or the measurement value to the network device. That is, in the case where the duration after the terminal triggers the relaxation exiting event (i.e., the duration in which the terminal meets the relaxation exiting criteria) reaches the first counting threshold and the terminal does not report the relaxation exiting event to the network device within a short period of time (i.e., the first preset duration), the terminal reports the relaxation exiting event and/or the measurement value to the network device.

It is noted that if the second timer is operating, it indicates that the terminal has reported the relaxation exiting event to the network device within the first preset duration. In order to prevent the terminal from frequently counting events and reporting them, in a possible implementation of embodiments of the disclosure, in the case where the first value is greater than the first counting threshold and the second timer is operating, since the terminal has reported the relaxation exiting event to the network device within a short period of time, the terminal may not need to report the target event (i.e., the relaxation exiting event) to the network device.

In a possible implementation of embodiments of the disclosure, if the first value of the first timer is less than or equal to the first counting threshold (i.e., the first timer has not expired), the terminal may not be reactive or responsive, e.g., the terminal does not need to report the target event (i.e., the relaxation exiting event) to the network device.

In any of the embodiments of the disclosure, if the target event triggered by the terminal is the relaxation exiting event, it indicates that the signal quality of the serving cell is poor. In this case, the terminal is free from limitation of the second timer, i.e., in the case where the first value of the first timer is greater than the first counting threshold, the terminal may send the relaxation exiting event and/or the measurement value to the network device.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

It should be noted that the setting of the first timer is for the case where no preset duration is configured, and whether to report the relaxation exiting event to the network device is determined according to the value of the first timer.

However, when a preset duration is configured, if the target event triggered by the terminal is the relaxation exiting event, for example., if it is determined that the target event triggered by the terminal is the relaxation exiting event according to the embodiment shown in FIG. 7 or FIG. 11, the terminal determines whether the second timer is operating. If the target event is the relaxation exiting event and the second timer is not operating, the terminal sends the relaxation exiting event and/or the measurement value to the network device. If the target event is the relaxation exiting event and the second timer is operating, the terminal may not need to send the relaxation exiting event to the network device. For example, the terminal may only send the measurement value to the network device.

Or, if a preset duration is configured, the terminal is free from limitation of the second timer, i.e. if the target event triggered by the terminal is the relaxation exiting event, the terminal sends the relaxation exiting event and/or the measurement value to the network device.

As illustrated in FIG. 13, FIG. 13 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 13, the measurement method includes, but is not limited to, the following steps.

At step 1301, a measurement value of a target measurement is obtained, in which the target measurement includes an RLM measurement and/or an RRM measurement.

At step 1302, it is determined, based on the measurement value and reference information corresponding to the target measurement, that a target event triggered by the terminal is a relaxation entering event.

Steps 1301 and 1302 may be realized in the manner in any of the embodiments of FIG. 2, FIG. 3, FIG. 4, and FIG. 8 described above in the disclosure, which is not limited in the embodiments of the disclosure and will not be repeated.

At step 1303, in response to the target event being the relaxation entering event, a first value of a third timer is read, in which the third timer is used for timing based on a time when the terminal most recently determined that the relaxation entering event was triggered.

In the embodiment of the disclosure, the third timer is used for timing based on a time when the terminal determined the last time that the relaxation entering event was triggered. That is, the third timer starts timing based on a time when the terminal most recently determined that a relaxation entering criteria is satisfied.

In embodiments of the disclosure, if the target event triggered by the terminal is the relaxation entering event, the value of the third timer is read, which is noted as the second value in the disclosure.

At step 1304, in response to the second value being greater than a second counting threshold and a fourth timer not operating, the relaxation entering event and/or the measurement value is sent to the network device, in which the fourth timer is used for timing based on a time when the terminal most recently sent the relaxation entering event.

In embodiments of the disclosure, the fourth timer is used for timing based on a time when the terminal sent the relaxation entering event the last time. That is, the fourth timer is used for timing based on the relaxation entering event most recently triggered by the terminal and a time when the terminal reports the relaxation entering event to the network device. The fourth timer starts timing when the terminal reports the relaxation entering event to the network device, and stops timing after a second preset duration after the starting time.

In embodiments of the disclosure, the second counting threshold is pre-set. For example, the second counting threshold may be configured by the network device or may be agreed upon by a protocol, which is not limited in the disclosure.

In embodiments of the disclosure, in order to prevent the terminal from frequently reporting information to the network device, in the disclosure, in the case where the second value of the third timer is greater than the second counting threshold (i.e., the third timer is expired) and the fourth timer is not operating, the terminal reports the relaxation entering state and/or the measurement value to the network device. That is, in the case where the duration after the terminal triggers the relaxation entering event (i.e., the duration in which the terminal meets the relaxation entering criteria) reaches the second counting threshold and the terminal does not report the relaxation entering event to the network device within a short period of time (i.e., the second preset duration), the terminal reports the relaxation entering state and/or the measurement value to the network device.

It is noted that if the fourth timer is operating, it indicates that the terminal has reported the relaxation entering event to the network device within the second preset duration. In order to prevent the terminal from frequently counting events and reporting them, in a possible implementation of embodiments of the disclosure, in the case where the second value is greater than the second counting threshold and the fourth timer is operating, since the terminal has reported the relaxation entering event to the network device within a short period of time, the terminal may not need to report the target event (i.e., the relaxation entering event) to the network device.

In a possible implementation of embodiments of the disclosure, if the second value of the third timer is less than or equal to the second counting threshold (i.e., the third timer has not expired), the terminal may not be reactive or responsive, e.g., the terminal does not need to report the target event (i.e., the relaxation entering event) to the network device.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

It should be noted that the setting of the third timer is for the case where no preset duration is configured, and whether to report the relaxation entering event to the network device is determined according to the value of the third timer.

However, when a preset duration is configured, if the target event triggered by the terminal is the relaxation entering event, for example, if it is determined that the target event triggered by the terminal is the relaxation entering event according to the embodiment shown in FIG. 5 or FIG. 10, the terminal determines whether the fourth timer is operating. If the target event is the relaxation entering event and the fourth timer is not operating, the terminal sends the relaxation entering event and/or the measurement value to the network device. If the target event is the relaxation entering event and the fourth timer is operating, the terminal may not need to send the relaxation entering event to the network device. For example, the terminal may only send the measurement value to the network device.

Or, if a preset duration is configured, the terminal is free from limitation of the fourth timer, i.e. if the target event triggered by the terminal is the relaxation entering event, the terminal sends the relaxation entering event and/or the measurement value to the network device.

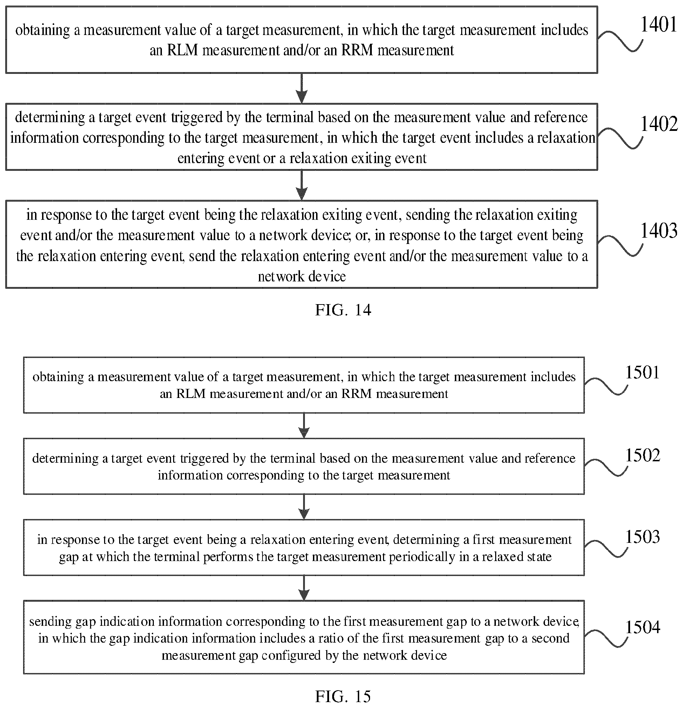

As illustrated in FIG. 14, FIG. 14 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 14, the measurement method includes, but is not limited to, the following steps.

At step 1401, a measurement value of a target measurement is obtained, in which the target measurement includes an RLM measurement and/or an RRM measurement.

At step 1402, a target event triggered by the terminal is determined based on the measurement value and reference information corresponding to the target measurement, in which the target event includes a relaxation entering event or a relaxation exiting event.

Steps 1401 and 1402 may be realized in the manner in any of the embodiments of the disclosure, which is not limited in the embodiments of the disclosure and will not be repeated.

At step 1403, in response to the target event being the relaxation exiting event, the relaxation exiting event and/or the measurement value is sent to the network device; or, in response to the target event being the relaxation entering event, the relaxation entering event and/or the measurement value is sent to the network device.

In embodiments of the disclosure, there is no need to determine whether or not to report the target event and/or the measurement value to the network device according to the value of the timer. For example, when the terminal triggers the target event, the target event and/or the measurement value may be automatically reported to the network device. That is, if the target event is the relaxation exiting event, the relaxation exiting event and/or the measurement value may be sent to the network device. If the target event is the relaxation entering event, the relaxation entering event and/or the measurement value may be sent to the network device.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

As illustrated in FIG. 15, FIG. 15 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 15, the measurement method includes, but is not limited to, the following steps.

At step 1501, a measurement value of a target measurement is obtained, in which the target measurement includes an RLM measurement and/or an RRM measurement.

At step 1502, a target event triggered by the terminal is determined based on the measurement value and reference information corresponding to the target measurement.

Steps 1501 and 1502 may be realized in the manner in any of the embodiments of the disclosure, which is not limited in the embodiments of the disclosure and will not be repeated.

At step 1503, in response to the target event being a relaxation entering event, a first measurement gap at which the terminal performs the target measurement periodically in a relaxed state is determined.

In embodiments of the disclosure, if the target event triggered by the terminal is the relaxation entering event, the first measurement gap preferred by the terminal to periodically perform the target measurement in the relaxed state may be determined.

For example, when the terminal has not entered the relaxed state, the terminal may periodically perform the target measurement at a shorter measurement gap, e.g., every 5 seconds. When the terminal has entered the relaxed state, the terminal may periodically perform the target measurement at a longer measurement gap, e.g., every 10 seconds (i.e., the first measurement gap is 10 seconds).

At step 1504, gap indication information corresponding to the first measurement gap is sent to the network device, in which the gap indication information includes a ratio of the first measurement gap to a second measurement gap configured by the network device.

In embodiments of the disclosure, the terminal may send gap indication information corresponding to the first measurement gap to the network device. The gap indication information may include a ratio of the first measurement gap to the second measurement gap configured by the network device. After receiving the gap indication information, the network device may configure the measurement gap for the terminal according to the ratio in the gap indication information, for example, configuring the measurement gap of the terminal as the first measurement gap.

According to the above examples, the first measurement gap preferred by the terminal is 10 seconds, and the second measurement gap configured by the network device is 5 seconds, and thus the ratio of the first measurement gap to the second measurement gap is 2. The network device may adjust the second measurement gap to 10 seconds according to the ratio.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines effectively, according to the measurement value of the target measurement and the reference information corresponding to the target measurement, whether it triggers the relaxation entering event, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

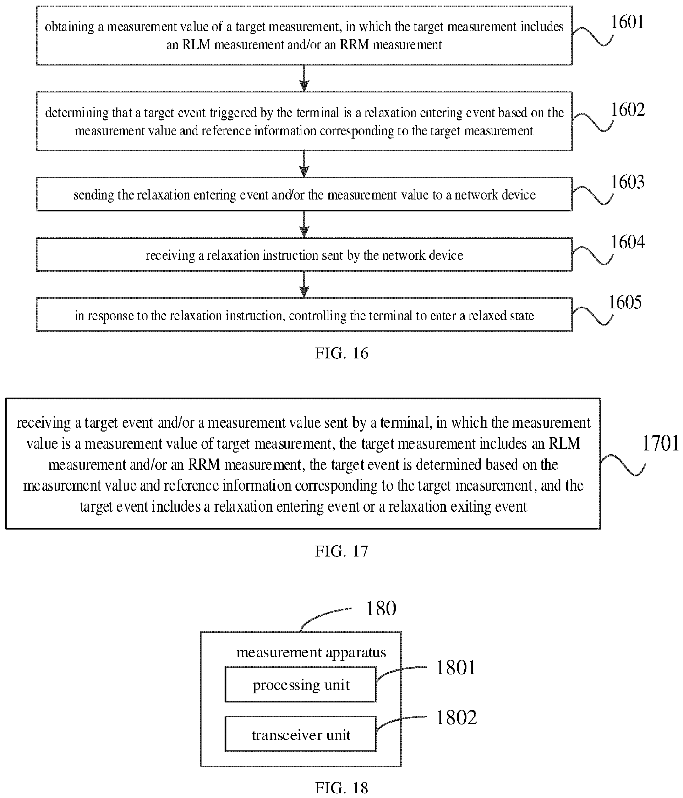

As illustrated in FIG. 16, FIG. 16 is a flowchart of a measurement method provided by an embodiment of the disclosure. The measurement method may be performed by the terminal in the communication system shown in FIG. 1. The measurement method may be performed alone or in combination with any of the embodiments or possible implementations of the embodiments in the disclosure, or in combination with any of the technical solutions in the related art.

As illustrated in FIG. 16, the measurement method includes, but is not limited to, the following steps.

At step 1601, a measurement value of a target measurement is obtained, in which the target measurement includes an RLM measurement and/or an RRM measurement.

At step 1602, it is determined that a target event triggered by the terminal is a relaxation entering event based on the measurement value and reference information corresponding to the target measurement.

At step 1603, the relaxation entering event and/or the measurement value is sent to a network device.

Steps 1601, 1602 and 1603 may be realized in the manner in any of the embodiments of the disclosure, which is not limited in the embodiments of the disclosure and will not be repeated.

At step 1604, a relaxation instruction sent by the network device is received.

In embodiments of the disclosure, the network device may send a relaxation instruction to the terminal after receiving the relaxation entering event sent by the terminal. The relaxation instruction is used to control the terminal to enter a relaxed state.

At step 1605, in response to the relaxation instruction, the terminal is controlled to enter a relaxed state.

In embodiments of the disclosure, after receiving the relaxation instruction sent by the network device, the terminal may enter the relaxed state in response to the relaxation instruction.

In a possible implementation of embodiments of the disclosure, the relaxation instruction may also include a target ratio. The target ratio may be generated by the network device according to the ratio in the gap indication information sent by the terminal, or the target ratio may be automatically generated by the network device, which is not limited in the disclosure. After entering the relaxed state, the terminal determines the target measurement gap according to the target ratio in the relaxation instruction and the second measurement gap configured by the network device. For example, the terminal may determine a product of the target ratio and the second measurement gap as the target measurement gap and perform the target measurement periodically according to the target measurement gap in the relaxed state.

In the measurement method of the embodiments of the disclosure, the measurement value of the target measurement is obtained. The target measurement includes the RLM measurement and/or the RRM measurement. The target event triggered by the terminal is determined according to the measurement value and the reference information corresponding to the target measurement. The target event includes: the relaxation entering event or the relaxation exiting event. Therefore, the terminal determines whether it triggers the relaxation entering event effectively according to the measurement value of the target measurement and the reference information corresponding to the target measurement, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

In any of the embodiments of the disclosure, the terminal may report the target event to the network device via UEAssistanceInformation (UAI).

As an example, the network device may configure, via an RRC message (e.g., RRC Reconfiguration=>otherConfig), whether or not the terminal needs to perform relaxation event detection (i.e., whether or not need to perform target event detection) and may configure an associated timer value. The network device may also configure whether the terminal is allowed to report a preferred relaxation parameter, i.e., gap indication information corresponding to the first measurement gap in the disclosure.

For example, the RRC message may include the following information: 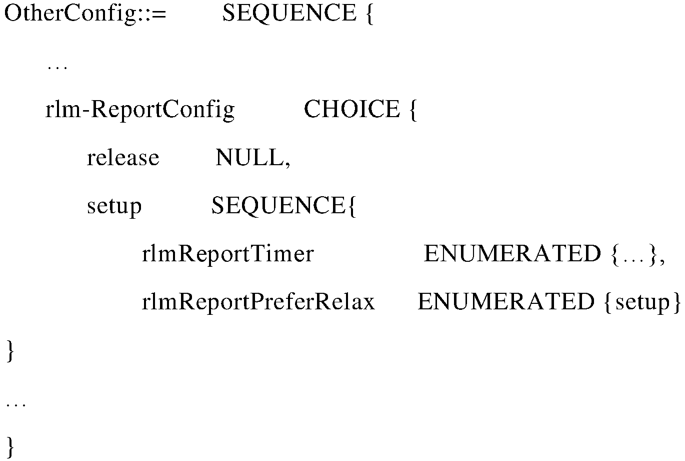 where rlmReportTimer is the second timer or the fourth timer that prevents frequent reporting of UAI in the following, and rlmReportPreferRelax is a reported parameter in the UAI in the following.

Information such as measurement value, target event, etc., obtained by the terminal in the measurement may be included in an RLM report (rlmReport).

As an example, the terminal may perform UAI initialization and report specific contents.

The terminal may determine whether to report according to a triggered target event (a relaxation entering event or a relaxation exiting event). The reporting type may be per UE or per cell group (CG).

If the terminal reports per UE, it is determined whether the target event triggered by the terminal is a relaxation entering event or a relaxation exiting event according to the SINR of the reference signal of the PCell. If the terminal reports per CG, it is determined, according to the SINR of the reference signal of the PCell or the PScell, whether the target event triggered by the terminal is a relaxation entering event or a relaxation exiting event.

In any of the embodiments of the disclosure, if the reporting type of the target event is per UE, the measurement value and/or the target event of the PCell corresponding to the terminal may be sent to the network device. That is, if the reporting type of the target event is per UE, the terminal may measure the downlink reference signal of the PCell and determine the target event in which the terminal is located according to the measurement value, and then report the information such as the measurement value and/or the target event of the PCell to the network device.

In any one of the embodiments of the disclosure, if the reporting type of the target event is per CG, the terminal may send the measurement value and/or the target event of the PCell in the CG corresponding to the terminal to the network device, or, the terminal may send the measurement value and/or the target event of the PScell in the CG corresponding to the terminal to the network device.

For example, if the CG is an MCG, the terminal may measure the downlink reference signals of the PCell in the MCG and determine the target event in which the terminal is located according to the measurement value. The information reported to the network device is the measurement value and/or the target event of the PCell in the MCG corresponding to the terminal.

If the CG is an SCG, the terminal may measure the downlink reference signal of the PScell in the SCG and determine the target event in which the terminal is located according to the measurement value. The information reported to the network device is the measurement value and/or the target event of the PScell in the SCG corresponding to the terminal.

If the low-mobility criteria or the good cell signal quality criteria is configured, the UAI may be reported via a single message. The UAI message is used to report the good cell signal quality event or the non-good cell signal quality event, or report the low-mobility event or the non-low-mobility event.

If both the low-mobility criteria and the good cell signal quality criteria are configured, the UAI may be reported respectively via two separate UAI messages. One UAI message is used for reporting the good cell signal quality event or the non-good cell signal quality event, and the other UAI message is used for reporting the low-mobility event or the non-low-mobility event. Or, the UAI may be reported via one message. For example, the UAI message is used for reporting the good cell signal quality event or the non-good cell signal quality event, and the UAI message is also used for reporting the low-mobility event or the non-low-mobility event.

### 1) UAI initialization

When the network device configures the terminal to report a target event, i.e., the network device configures the terminal to report a relaxation event, if the terminal detects a relaxation exiting event (i.e., the first timer is expired) and the second timer is not started, the value of the second timer is set to the timer value configured by the network device, and the second timer is started. UAI transmission is initialized, and the content is reported to the network device according to the next step. If the terminal detects a relaxation entering event (i.e., the third timer is expired) and the fourth timer is not started, the value of the fourth timer is set to the timer value configured by the network device and the fourth timer is started. UAI transmission is initialized, and the content is reported to the network device according to the next step.

### 2) Report content

The terminal may report an RLM report to the network device via UAI. The RLM report includes, but is not limited to, the relaxation exiting event, the relaxation entering event, the relaxation parameter preferred by the terminal (i.e., gap indication information corresponding to the first measurement gap), and a measurement value, etc..

For example, when the terminal is configured to provide an RLM report, if the first timer is expired, the terminal is automatically triggered to report that the target event is the relaxation exiting event, i.e., reporting that the target state in which the terminal is in is a relaxation exiting state. If the third timer is expired, the terminal is automatically triggered to report that the target event is the relaxation entering event. That is, when the event is reported via the UAI message, the relaxation exiting event may be free of the limitation of the second timer or the fourth timer.

If the terminal is configured to report the measurement result, the terminal may report a measurement value to the network device.

If the terminal is configured to report the preferred relaxation parameter (PreferRelax), the terminal may report the gap indication information corresponding to the first measurement gap to the network device.

The definition of the associated timer is shown in Table 1.

**Table 1**

| Timer | Explanation | start | stop | expire |
|---|---|---|---|---|
| first timer (exit) | a Punish timer that prevents the terminal from entering/exiting a relaxed state when the channel state is unstable; Scope of application: PCell and/or SCell; which is sent through a network device display or agreed upon by a protocol; | at a time when the relaxation exiting criteria is satisfied | when the relaxation entering criteria is satisfied; or when a switchover is triggered; or when a connection initialization reestablishment step is performed | UAI initialization step |
| third timer (enter) | | at a time when the relaxation entering criteria is satisfied | when the relaxation exiting criteria is satisfied; or when a switchover is triggered; or when a connection initialization reestablishment step is performed | UAI initialization step |
| second timer | a Prohibit timer for limiting the reporting frequency of UAI; Scope of application: PCell and/or SCell; which is sent through a | when transmitting a UAI message including an RLM report of a relaxation exiting event | when a connection initialization reestablishment step is performed | no action |
| fourth timer | | when transmitting a UAI message including an RLM report of a relaxation entering event | when a connection initialization reestablishment step is performed | no action |

It should be noted that each element and each correspondence in Table 1 exists independently. These elements and correspondences are exemplarily listed in the same table, but it does not mean that all elements and correspondences in the table must exist at the same time as shown in Table 1. Each element value and each correspondence is independent of any other element value or correspondence in Table 1. Therefore, it can be understood by those skilled in the art that each element value and each correspondence in Table 1 is an independent embodiment.

In Table 1, if the UAI is configured with the low-mobility criteria, the terminal reports the low-mobility event or the non-low-mobility event to the network device under the limit of the Prohibit timer.

If the UAI is configured with the good cell signal quality criteria, the terminal reports the good cell signal quality event or the non-good cell signal quality event to the network device under the limit of the Prohibit timer.

If the UAI is configured with the low-mobility criteria and the good cell signal quality criteria, the terminal reports the good cell signal quality event and the low-mobility event to the network device under the limit of the Prohibit timer, and reports the relaxation exiting event when any of the criterion is not met.

In any of the embodiments of the disclosure, the terminal may report the target event and/or the measurement value via an RRC message. The reporting type may be per UE/CG.

As an example, the network device may notify the terminal of the measurement configuration (measConfig) via an RRC message, such as an RRCReconfiguration message. The measurement configuration may be bound to a measurement object (measObject), a report configuration (reportConfig), and a measurement ID (measId).

The measObject in the measurement configuration may be a serving cell of the terminal.

The reportConfig in the measurement configuration may be event-based triggering.

After the terminal receives the measurement configuration, it executes the corresponding measurement process. If the measurement value satisfies the condition of the corresponding event, it is automatically triggered to report the information. The report information includes: the measurement value, and/or, the entering condition of the event being met (i.e., the target event is the relaxation entering event). If the measurement value satisfies the exiting condition corresponding to the event described above, the terminal is automatically triggered to report. The report information includes: the measurement value, and/or, the exiting condition being met (i.e., the target event is the relaxation exiting event).

As illustrated in FIG. 17, FIG. 17 is a flowchart of a measurement method provided by an embodiment of the disclosure. The measurement method may be performed by the network device in the communication system shown in FIG. 1.

As illustrated in FIG. 17, the measurement method includes, but is not limited to, the following steps.

At step 1701, a target event and/or a measurement value sent by a terminal is received, in which the measurement value is a measurement value of a target measurement, the target measurement includes an RLM measurement and/or an RRM measurement, the target event is determined according to the measurement value and reference information corresponding to the target measurement, and the target event includes a relaxation entering event or a relaxation exiting event.

In a possible implementation of embodiments of the disclosure, the network device may send the reference information to the terminal.

In a possible implementation of embodiments of the disclosure, in response to the target event being the relaxation entering event, the network device may send a relaxation instruction to the terminal. The relaxation instruction is used to control the terminal to enter a relaxed state.

It is noted that the explanatory description of the measurement method performed by the terminal in any of the preceding embodiments is also applicable to the measurement method performed by the network device. The implementation principles are similar and will not be repeated herein.

In the measurement method of the embodiments of the disclosure, the network device receives the target event and/or the measurement value sent by the terminal. The measurement value is the measurement value of the target measurement. The target measurement includes the RLM measurement and/or the RRM measurement. The target event is determined according to the measurement value and the reference information corresponding to the target measurement. The target event includes: the relaxation entering event or the relaxation exiting event. Therefore, the terminal determines whether it triggers the relaxation entering event effectively according to the measurement value of the target measurement and the reference information corresponding to the target measurement, so that when the terminal triggers the relaxation entering event, it reports the relaxation entering event to the network device to enable the relaxation mechanism and improve the endurance of the terminal. Moreover, whether the terminal triggers the relaxation entering event or the relaxation exiting event can be determined according to the measurement value of the target measurement and the reference information corresponding to the target measurement, thereby improving the accuracy and reliability of the event determination result.

It should be noted that these possible implementations described above may be performed individually or together, which is not limited in the embodiments of the disclosure.

In the above embodiments of the disclosure, the method provided in the embodiments of the disclosure is described from the perspectives of the network device and the terminal, respectively. In order to implement each of the above-described functions in the method provided by the embodiments of the disclosure, the network device and the terminal may include a hardware structure or a software module, and implement each of the above-described functions in the form of a hardware structure, a software module, or a combination of the hardware structure and the software module. A certain function of the above functions may be performed in the form of a hardware structure, a software module, or a combination of the hardware structure and the software module.

FIG. 18 is a block diagram of a measurement apparatus 180 provided by an embodiment of the disclosure. The measurement apparatus 180 shown in FIG. 18 includes a processing unit 1801 and a transceiver unit 1802. The transceiver unit 1802 may include a sending unit and/or a receiving unit. The sending unit is configured to implement a sending function, and the receiving unit is configured to implement a receiving function. The transceiver unit can implement the sending function and/or the receiving function.

The measurement apparatus 180 may be a terminal, or an apparatus in the terminal, or an apparatus that can be used together with the terminal. Or, the measurement apparatus 180 may be a network device, or an apparatus in the network device, or an apparatus that can be used together with the network device.

If the measurement apparatus 180 is a terminal, the processing unit 1801 is configured to: obtain a measurement value of a target measurement, in which the target measurement includes an RLM measurement and/or an RRM measurement; and determine a target event triggered by the terminal based on the measurement value and reference information corresponding to the target measurement, in which the target event includes a relaxation entering event or a relaxation exiting event.

In some embodiments, the processing unit 1801 is configured to: obtain the measurement value by measuring a downlink reference signal of a serving cell of the terminal.

In some embodiments, the reference information is sent by the network device and applicable to a PCell and/or a SCell.

In some embodiments, the measurement value includes a plurality of second RSRPs obtained by measuring a downlink reference signal for multiple times within a preset duration after a target time period, or the measurement value includes a plurality of second RSRPs obtained by measuring a plurality of downlink reference signals within the preset duration. The processing unit 1801 is configured to: determine a first difference between the at least one first RSRP and a corresponding reference value, in which the reference value corresponding to the first RSRP is obtained by the terminal before measuring the first RSRP; and in response to the first difference corresponding to the at least one first RSRP being less than a first difference threshold, determine that the target event is the relaxation entering event.

In some embodiments, the measurement value includes a plurality of second RSRPs obtained by measuring a downlink reference signal for multiple times within a preset duration after the target time period, or the measurement value includes a plurality of second RSRPs obtained by measuring a plurality of downlink reference signals within the preset duration. The processing unit 1801 is configured to: in response to first differences corresponding to a plurality of first RSRPs all being less than the first difference threshold, determine second differences between the plurality of second RSRPs and corresponding reference values, in which the reference value corresponding to the second RSRP is obtained by the terminal before measuring the second RSRP; and in response to the second differences corresponding to the plurality of second RSRPs all being less than the first difference threshold, determine that the target event is the relaxation entering event.

In some embodiments, the reference information includes the target time period and a second difference threshold. The measurement value includes at least one first RSRP obtained by measuring a downlink reference signal at least once within the target time period, or the measurement value includes at least one first RSRP obtained by measuring at least one downlink reference signal within the target time period. The processing unit 1801 is configured to: determine a first difference between the at least one first RSRP and a corresponding reference value, in which the reference value corresponding to the first RSRP is obtained by the terminal before measuring the first RSRP; and in response to the first difference corresponding to the at least one first RSRP being greater than or equal to the second difference threshold, determine that the target event is the relaxation exiting event.

In some embodiments, the measurement value includes a plurality of second RSRPs obtained by measuring a downlink reference signal for multiple times within a preset duration after the target time period, or, the measurement value includes a plurality of second RSRPs obtained by measuring a plurality of downlink reference signals within the preset duration. The processing unit 1801 is configured to: in response to there being at least one first RSRP having the corresponding first difference greater than or equal to the second difference threshold, determine second differences between the plurality of second RSRPs and corresponding reference values, in which the reference value corresponding to the second RSRP is obtained by the terminal before measuring the second RSRP; and in response to a second difference corresponding to at least one second RSRP being greater than or equal to the second difference threshold, determine that the target event is the relaxation exiting event.

In some embodiments, the reference value is updated in the following manner: in response to the terminal performing cell switching, updating the corresponding reference value according to the first RSRP; or, in response to a difference obtained by subtracting the reference value from the first RSRP being greater than a third difference threshold, updating the corresponding reference value according to the first RSRP; or, in response to the first difference of the first RSRP not being less than the first difference threshold within the target time period, updating the corresponding reference value according to the first RSRP, or, in response to the first difference of the first RSRP being less than the second difference threshold within the target time period, updating the corresponding reference value according to the first RSRP.

In some embodiments, the reference value is updated in the following manner: in response to the terminal performing cell switching, updating the corresponding reference value according to the second RSRP; or, in response to a difference obtained by subtracting the reference value from the second RSRP being greater than a third difference threshold, updating the corresponding reference value according to the first RSRP; or, in response to the second difference of the second RSRP not being less than the first difference threshold within the preset duration, updating the corresponding reference value according to the second RSRP, or, in response to the second difference of the second RSRP being less than the second difference threshold within the preset duration, updating a corresponding reference value according to the second RSRP.

In some embodiments, the measurement value includes a plurality of first SINRs obtained by measuring a plurality of downlink reference signals, the reference information includes threshold indication information. The processing unit 1801 is configured to: determine a first quality threshold based on the threshold indication information; and in response to the plurality of first SINRs being greater than the first quality threshold, determine that the target event is the relaxation entering event; or, in response to at least one of the plurality of first SINRs being greater than the first quality threshold, determine that the target event is the relaxation entering event.

In some embodiments, the measurement value includes a plurality of first SINRs obtained by measuring a plurality of downlink reference signals, the reference information includes threshold indication information. The processing unit 1801 is configured to: determine a second quality threshold based on the threshold indication information; and in response to at least one of the plurality of first SINRs being less than or equal to the second quality threshold, determine that the target event is the relaxation exiting event; or, in response to the plurality of first SINRs all being less than or equal to the second quality threshold, determine that the target event is the relaxation exiting event.

In some embodiments, the measurement value includes a plurality of second SINRs obtained by measuring each of a plurality of downlink reference signals for multiple times within a preset duration, the reference information includes: threshold indication information. The processing unit 1801 is configured to: determine a first quality threshold based on the threshold indication information; and in response to the plurality of second SINRs corresponding to each downlink reference signal all being greater than the first quality threshold, determine that the target event is the relaxation entering event; or, in response to the plurality of second SINRs corresponding to at least one downlink reference signal all being greater than the first quality threshold, determine that the target event is the relaxation entering event.

In some embodiments, the measurement value includes a plurality of second SINRs obtained by measuring each of a plurality of downlink reference signals for multiple times within a preset duration, the reference information includes: threshold indication information. The processing unit 1801 is configured to: determine a second quality threshold based on the threshold indication information; and in response to the plurality of second SINRs corresponding to at least one downlink reference signal all being less than or equal to the second quality threshold, determine that the target event is the relaxation exiting event; or, in response to the plurality of second SINRs corresponding to each downlink reference signal all being less than or equal to the second quality threshold, determine that the target event is the relaxation exiting event.

In some embodiments, the processing unit 1801 is configured to: in response to the target event being the relaxation exiting event, read a first value of a first timer, in which the first timer is used for timing based on a time when the terminal most recently determined that the relaxation exiting event was triggered.

The transceiver unit 1802 is configured to: in response to the first value being greater than a first counting threshold and a second timer not operating, send the relaxation exiting event and/or the measurement value to the network device, in which the second timer is used for timing based on a time when the terminal most recently sent the relaxation exiting event.

In some embodiments, the processing unit 1801 is configured to: in response to the target event being the relaxation entering event, read a first value of a third timer, in which the third timer is used for timing based on a time when the terminal most recently determined that the relaxation entering event was triggered.

The transceiver unit 1802 is configured to: in response to a second value being greater than a second counting threshold and a fourth timer not operating, send the relaxation entering event and/or the measurement value to a network device, in which the fourth timer is used for timing based on a time when the terminal most recently sent the relaxation entering event.

In some embodiments, the transceiver unit 1802 is configured to: in response to the target event being the relaxation exiting event and a second timer not operating, send the relaxation exiting event and/or the measurement value to a network device, in which the second timer is used for timing based on a time when the terminal most recently sent the relaxation exiting event.

In some embodiments, the transceiver unit 1802 is configured to: in response to the target event being the relaxation entering event and a fourth timer not operating, send the relaxation entering event and/or the measurement value to a network device, in which the fourth timer is used for timing based on a time when the terminal most recently sent the relaxation entering event.

In some embodiments, the transceiver unit 1802 is configured to: in response to a reporting type of the target event being per user equipment, send the measurement value and/or the target event of a PCell corresponding to the terminal to a network device; and in response to a reporting type of the target event being per cell group, send the measurement value and/or the target event of a PCell in a cell group corresponding to the terminal to a network device, or send the measurement value and/or the target event of a PScell in a cell group corresponding to the terminal to a network device.

In some embodiments, the transceiver unit 1802 is configured to: in response to the target event being the relaxation exiting event, send the relaxation exiting event and/or the measurement value to a network device; or in response to the target event being the relaxation entering event, send an relaxation entering event and/or the measurement value to a network device.

In some embodiments, the processing unit 1801 is configured to: in response to the target event being the relaxation entering event, determine a first measurement gap at which the terminal performs the target measurement periodically in a relaxed state.

The transceiver unit 1802 is configured to: send gap indication information corresponding to the first measurement gap to the network device, in which the gap indication information includes a ratio of the first measurement gap to a second measurement gap configured by the network device.

In some embodiments, the transceiver unit 1802 is configured to: receive a relaxation instruction sent by a network device.

The processing unit 1801 is configured to: in response to the relaxation instruction, control the terminal to enter a relaxed state.

In some embodiments, the relaxation instruction includes a target ratio. The processing unit 1801 is configured to: determine a target measurement gap based on the target ratio and the second measurement gap configured by the network device; and perform the target measurement periodically in the relaxed state based on the target measurement gap.

If the measurement apparatus 180 is a network device, the transceiver unit 1802 is configured to: receive a target event and/or a measurement value sent by a terminal, in which the measurement value is a measurement value of a target measurement, the target measurement includes an RLM measurement and/or an RRM measurement, the target event is determined based on the measurement value and reference information corresponding to the target measurement, and the target event comprises a relaxation entering event or a relaxation exiting event.

In some embodiments, the transceiver unit 1802 is configured to: send the reference information to the terminal.

In some embodiments, the transceiver unit 1802 is configured to: in response to the target event being the relaxation entering event, send a relaxation instruction to the terminal, in which the relaxation instruction is used to control the terminal to enter a relaxed state.

It is noted that the explanatory description of the method performed on the terminal side in any of the aforementioned embodiments of FIGS. 2-16 or the explanatory description of the method performed on the network device side in the aforementioned embodiment of FIG. 17 is also applicable to the measurement apparatus 180 of the embodiment. The implementation principles are similar and will not be repeated here.

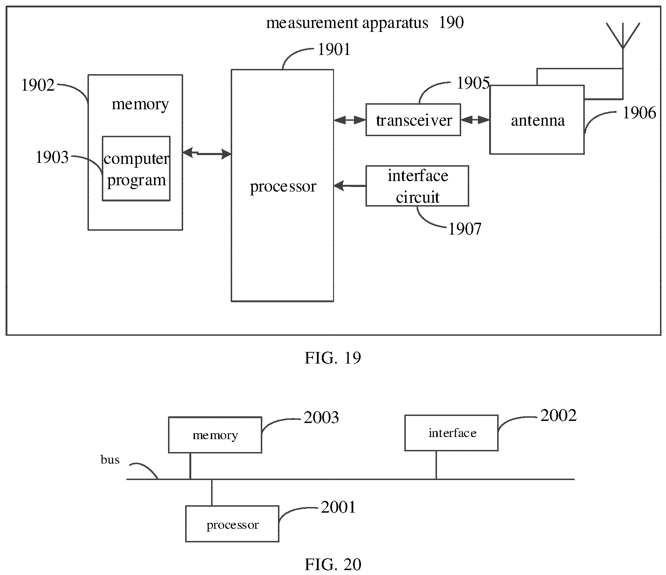

FIG. 19 is a block diagram of a measurement apparatus 190 provided by an embodiment of the disclosure. The measurement apparatus 190 may be a network device or a terminal, or may be a chip, a chip system or a processor that supports the network device to realize the above-described methods, or may be a chip, a chip system or a processor that supports the terminal to realize the above-described methods. The apparatus may be used to realize the methods described in the above method embodiments with reference to the description of the above-described method embodiments.

The measurement apparatus 190 may include one or more processors 1901. The processor 1901 may be a general purpose processor or a dedicated processor, such as, a baseband processor or a central processor. The baseband processor is used for processing communication protocols and communication data. The central processor is used for controlling the measurement device (e.g., base station, baseband chip, terminal, terminal chip, central unit (CU) or distributed unit (DU)), executing computer programs, and processing data of the computer programs.

Optionally, the measurement apparatus 190 may include one or more memories 1902 on which computer programs 1903 may be stored. The processor 1901 executes the computer programs 1903 to cause the measurement apparatus 190 to perform the methods described in the above method embodiments. The computer program 1903 may be solidified in the processor 1901, and in such case the processor 1901 may be implemented by hardware.

Optionally, the memory 1902 may also store data. The measurement device 190 and the memory 1902 may be provided separately or may be integrated together.

Optionally, the measurement apparatus 190 may also include a transceiver 1905 and an antenna 1906. The transceiver 1905 may be referred to as a transceiver unit, a transceiver machine, or a transceiver circuit, for realizing a transceiver function. The transceiver 1905 may include a receiver and a transmitter. The receiver may be referred to as a receiving machine or a receiving circuit, for realizing the receiving function. The transmitter may be referred to as a transmitter machine or a transmitting circuit, for realizing the transmitting function.

Optionally, the measurement apparatus 190 may also include one or more interface circuits 1907. The interface circuits 1907 are used to receive code instructions and transmit them to the processor 1901. The processor 1901 runs the code instructions to cause the measurement apparatus 190 to perform the method described in the method embodiments.

The measurement apparatus 190 is a terminal. The processor 1901 is used for performing any of the method embodiments shown above in FIGS. 2 to 16 of the disclosure.

The measurement apparatus 190 is a network device. The processor 1901 is used for performing the method embodiment shown in FIG. 17 of the disclosure.

It is noted that the explanatory description of the measurement method in any of the aforementioned embodiments of FIGS. 2 to 17 is also applicable to the measurement device 190 of the embodiment, which is realized in a similar principle and is not repeated herein.

In an implementation, the processor 1901 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the measurement apparatus 190 may include circuits. The circuits may implement the sending, receiving or communicating function in the preceding method embodiments. The processor and the transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The measurement apparatus in the description of the above embodiments may be a network device or a terminal, but the scope of the measurement apparatus described in the disclosure is not limited thereto, and the structure of the measurement device may not be limited by FIG. 19. The measurement apparatus may be a stand-alone device or may be part of a larger device. For example, the described measurement apparatus may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

In the case where the measurement apparatus may be a chip or a chip system, reference may be made to the schematic structural diagram of the chip shown in FIG. 20. The chip shown in FIG. 20 includes a processor 2001 and an interface 2002. There may be one or more processors 2001 and multiple interfaces 2002.

In the case where the chip is used to implement the functions of the terminal in the embodiment of the disclosure,
the interface 2002 is used to receive code instructions and transmit them to the processor 2001; and
the processor 2001 is used to run the code instructions to execute the method as shown in any of the embodiments of FIGS. 2-16.

In the case where the chip is used to implement the functions of the network device in the embodiment of the disclosure,
the interface 2002 is used to receive code instructions and transmit them to the processor 2001; and
the processor 2001 is used to run the code instructions to execute the method as shown in the embodiment of FIG. 17.

Optionally, the chip further includes a memory 2003 used to store necessary computer programs and data.

It should be noted that the explanatory description of the measurement method in any of the aforementioned embodiments of FIGS. 2-17 is also applicable to the chip of the embodiment, which is realized in a similar principle and is not repeated herein.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

Embodiments of the disclosure also provide a communication system. The system includes a measurement apparatus as a terminal or a network device in the preceding embodiment of FIG. 19. Or, the system includes a measurement apparatus as a terminal or a network device in the preceding embodiment of FIG. 20.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server or a data center that includes one or more available mediums. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the disclosure are only used for the convenience of description, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

It is further understood that the term "multiple" in the disclosure refers to two or more, which is the similar for other quantifiers. The term "and/or" describes a relation of associated objects, which indicates three relations, for example, "A and/or B" indicates that A exists alone, A and B both exist, and B exists alone. The character "/" generally indicates that the associated objects prior to and after the character "/" is an "or" relation. The terms "a", "said" and "the" in the singular form are also intended to include the plural form, unless the context clearly indicates otherwise.

The word "if' as used herein may be interpreted as "when", "while" or "in response to determining".

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. A measurement method, performed by a terminal, comprising:
obtaining a measurement value of a target measurement, wherein the target measurement comprises a radio link monitor (RLM) measurement and/or a radio resource management (RRM) measurement; and
determining a target event triggered by the terminal based on the measurement value and reference information corresponding to the target measurement, wherein the target event comprises a relaxation entering event or a relaxation exiting event.

2. The method of claim 1, wherein obtaining the measurement value of the target measurement, comprises:
obtaining the measurement value by measuring a downlink reference signal of a serving cell of the terminal.

3. The method of claim 1 or 2, wherein the reference information is sent by a network device and applicable for a primary serving cell and/or a secondary serving cell.

4. The method of any one of claims 1-3, wherein the reference information comprises: a target time period and a first difference threshold, the measurement value comprises at least one first reference signal receiving power (RSRP) obtained by measuring a downlink reference signal at least once within the target time period, or the measurement value comprises at least one first RSRP obtained by measuring at least one downlink reference signal within the target time period;
determining the target event triggered by the terminal based on the measurement value and the reference information corresponding to the target measurement, comprises:
determining a first difference between the at least one first RSRP and a reference value corresponding to the first RSRP, wherein the reference value corresponding to the first RSRP is obtained by the terminal before measuring the first RSRP; and
determining that the target event is the relaxation entering event, in response to each first difference corresponding to the at least one first RSRP being less than the first difference threshold.

5. The method of claim 4, wherein the measurement value further comprises a plurality of second RSRPs obtained by measuring a downlink reference signal for multiple times within a preset duration after the target time period, or comprises a plurality of second RSRPs obtained by measuring a plurality of downlink reference signals within the preset duration;
determining that the target event is the relaxation entering event, in response to each first difference corresponding to the at least one first RSRP being less than the first difference threshold, comprises:
determining second differences between the plurality of second RSRPs and corresponding reference values, in response to each of first differences corresponding respectively to a plurality of first RSRPs being less than the first difference threshold; and
determining that the target event is the relaxation entering event, in response to each of the second differences corresponding respectively to the plurality of second RSRPs being less than the first difference threshold.

6. The method of any one of claims 1-3, wherein the reference information comprises a target time period and a second difference threshold, the measurement value comprises at least one first RSRP obtained by measuring a downlink reference signal at least once within the target time period, or the measurement value comprises at least one first RSRP obtained by measuring at least one downlink reference signal within the target time period;
determining the target event triggered by the terminal based on the measurement value and the reference information corresponding to the target measurement, comprises:
determining a first difference between the at least one first RSRP and a reference value corresponding to the first RSRP, wherein the reference value corresponding to the first RSRP is obtained by the terminal before measuring the first RSRP; and
determining that the target event is the relaxation exiting event, in response to a first difference corresponding to the at least one first RSRP being greater than or equal to the second difference threshold.

7. The method of claim 6, wherein the measurement value further comprises a plurality of second RSRPs obtained by measuring a downlink reference signal for multiple times within a preset duration after the target time period, or comprises a plurality of second RSRPs obtained by measuring a plurality of downlink reference signals within the preset duration;
determining that the target event is the relaxation exiting event, in response to the first difference corresponding to the at least one first RSRP being greater than or equal to the second difference threshold, comprises:
determining second differences between the plurality of second RSRPs and corresponding reference values, in response to the first difference corresponding to the at least one first RSRP being greater than or equal to the second difference threshold; and
determining that the target event is the relaxation exiting event, in response to a second difference corresponding to at least one second RSRP being greater than or equal to the second difference threshold.

8. The method of claim 4 or 6, wherein the reference value is updated in a manner of:
updating the reference value based on the first RSRP, in response to the terminal performing cell switching;
updating the reference value based on the first RSRP, in response to a difference obtained by subtracting the reference value from the first RSRP being greater than a third difference threshold; or,
updating the reference value based on the first RSRP, in response to the first difference of the first RSRP not being less than the first difference threshold within the target time period, or, updating the reference value based on the first RSRP, in response to the first difference of the first RSRP being less than the second difference threshold within the target time period.

9. The method of claim 5 or 7, wherein the reference value is updated in a manner of:
updating the reference value based on the second RSRP, in response to the terminal performing cell switching;
updating the reference value based on the first RSRP, in response to a difference obtained by subtracting the reference value from the second RSRP being greater than a third difference threshold; or
updating the reference value based on the second RSRP, in response to the second difference of the second RSRP not being less than the first difference threshold within the preset duration, or, updating the reference value based on the second RSRP, in response to the second difference of the second RSRP being less than the second difference threshold within the preset duration.

10. The method of any one of claims 1-9, wherein the measurement value comprises a plurality of first signal to interference plus noise ratios (SINRs) obtained by measuring a plurality of downlink reference signals, the reference information comprises threshold indication information;
determining the target event triggered by the terminal based on the measurement value and the reference information corresponding to the target measurement, comprises:
determining a first quality threshold based on the threshold indication information; and
determining that the target event is the relaxation entering event, in response to the plurality of first SINRs being greater than the first quality threshold; or, determining that the target event is the relaxation entering event, in response to at least one of the plurality of first SINRs being greater than the first quality threshold.

11. The method of any one of claims 1-9, wherein the measurement value comprises a plurality of first SINRs obtained by measuring a plurality of downlink reference signals, and the reference information comprises: threshold indication information;
determining the target event triggered by the terminal based on the measurement value and the reference information corresponding to the target measurement, comprises:
determining a second quality threshold based on the threshold indication information; and
determining that the target event is the relaxation exiting event, in response to at least one of the plurality of first SINRs being less than or equal to the second quality threshold; or, determining that the target event is the relaxation exiting event, in response to the plurality of first SINRs being less than or equal to the second quality threshold.

12. The method of any one of claims 1-9, wherein the measurement value comprises a plurality of second SINRs obtained by measuring each of a plurality of downlink reference signals for multiple times within a preset duration, the reference information comprises: threshold indication information;
determining the target event triggered by the terminal based on the measurement value and the reference information corresponding to the target measurement, comprises:
determining a first quality threshold based on the threshold indication information; and
determining that the target event is the relaxation entering event, in response to the plurality of second SINRs corresponding to each of the plurality of downlink reference signals being greater than the first quality threshold; or determining that the target event is the relaxation entering event, in response to the plurality of second SINRs corresponding to at least one of the plurality of downlink reference signals being greater than the first quality threshold.

13. The method of any one of claims 1-9, wherein the measurement value comprises a plurality of second SINRs obtained by measuring each of a plurality of downlink reference signals for multiple times within a preset duration, the reference information comprises: threshold indication information;
determining the target event triggered by the terminal based on the measurement value and the reference information corresponding to the target measurement, comprises:
determining a second quality threshold based on the threshold indication information; and
determining that the target event is the relaxation exiting event, in response to the plurality of second SINRs corresponding to at least one of the plurality of downlink reference signals being less than or equal to the second quality threshold; or, determining that the target event is the relaxation exiting event, in response to the plurality of the second SINRs corresponding to each of the plurality of downlink reference signals being less than or equal to the second quality threshold.

14. The method of any one of claims 1-3, 6, and 11, further comprising:
reading a first value of a first timer, in response to the target event being the relaxation exiting event, wherein the first timer is used for timing based on a time when the terminal most recently determined that the relaxation exiting event was triggered; and
sending the relaxation exiting event and/or the measurement value to a network device, in response to the first value being greater than a first counting threshold and a second timer not operating, wherein the second timer is used for timing based on a time when the terminal most recently sent the relaxation exiting event.

15. The method of any one of claims 1-4, and 10, further comprising:
reading a first value of a third timer, in response to the target event being the relaxation entering event, wherein the third timer is used for timing based on a time when the terminal most recently determined that the relaxation entering event was triggered; and
sending the relaxation entering event and/or the measurement value to a network device, in response to the second value being greater than a second counting threshold and a fourth timer not operating, wherein the fourth timer is used for timing based on a time when the terminal most recently sent the relaxation entering event.

16. The method of any one of claims 1-3, 7, and 13, further comprising:
sending the relaxation exiting event and/or the measurement value to a network device, in response to the target event being the relaxation exiting event and a second timer not operating, wherein the second timer is used for timing based on a time when the terminal most recently sent the relaxation exiting event.

17. The method of any one of claims 1-3, 5, and 12, further comprising:
sending the relaxation entering event and/or the measurement value to a network device, in response to the target event being the relaxation entering event and a fourth timer not operating, wherein the fourth timer is used for timing based on a time when the terminal most recently sent the relaxation entering event.

18. The method of any one of claims 1-13, further comprising:
sending the relaxation exiting event and/or the measurement value to a network device, in response to the target event being the relaxation exiting event; or
sending the relaxation entering event and/or the measurement value to a network device, in response to the target event being the relaxation entering event.

19. The method of any one of claims 1-13, further comprising:
sending the measurement value and/or the target event of a primary serving cell corresponding to the terminal to a network device, in response to a reporting type of the target event being per user equipment; and
sending the measurement value and/or the target event of a primary serving cell in a cell group corresponding to the terminal to a network device, or sending the measurement value and/or the target event of a primary secondary serving cell in a cell group corresponding to the terminal to a network device, in response to a reporting type of the target event being per cell group.

20. The method of any one of claims 1-19, further comprising:
determining a first measurement gap at which the terminal performs the target measurement periodically in a relaxed state, in response to the target event being the relaxation entering event; and
sending gap indication information corresponding to the first measurement gap to a network device, wherein the gap indication information comprises a ratio of the first measurement gap to a second measurement gap configured by the network device.

21. The method of any one of claims 1-20, further comprising:
receiving a relaxation instruction sent by a network device;
controlling the terminal to enter a relaxed state, in response to the relaxation instruction.

22. The method of claim 20, wherein the relaxation instruction comprises a target ratio, the method further comprises:
determining a target measurement gap based on the target ratio and the second measurement gap configured by the network device; and
performing the target measurement periodically in the relaxed state based on the target measurement gap.

23. A measurement method, performed by a network device, comprising:
receiving a target event and/or a measurement value sent by a terminal, wherein the measurement value is a measurement value of a target measurement, the target measurement comprises a radio link monitor (RLM) measurement and/or a radio resource management (RRM) measurement, the target event is determined based on the measurement value and reference information corresponding to the target measurement, and the target event comprises a relaxation entering event or a relaxation exiting event.

24. The method of claim 23, further comprising:
sending the reference information to the terminal.

25. The method of claim 23 or 24, further comprising:
sending a relaxation instruction to the terminal, in response to the target event being the relaxation entering event, wherein the relaxation instruction is used to control the terminal to enter a relaxed state.

26. A measurement apparatus, applied to a terminal, comprising:
a processing unit, configured to obtain a measurement value of a target measurement, in which the target measurement comprises a radio link monitor (RLM) measurement and/or a radio resource management (RRM) measurement; and to determine a target event triggered by the terminal based on the measurement value and reference information corresponding to the target measurement, wherein the target event comprises a relaxation entering event or a relaxation exiting event.

27. A measurement apparatus, applied to a network device, comprising:
a transceiver unit, configured to receive a target event and/or a measurement value sent by a terminal, wherein the measurement value is a measurement value of a target measurement, the target measurement comprises a radio link monitor (RLM) measurement and/or a radio resource management (RRM) measurement, the target event is determined based on the measurement value and reference information corresponding to the target measurement, and the target event comprises a relaxation entering event or a relaxation exiting event.

28. A measurement device, comprising: a processor and a memory having computer programs stored thereon, wherein when the computer programs are executed by the processor, the method of any one of claims 1-22 or the method of any one of claims 23-25 is implemented.

29. A measurement device, comprising: a processor and an interface circuit;
wherein the interface circuit is configured to receive code instructions and transmit the code instructions to the processor; and
the processor is configured to run the code instructions to implement the method of any one of claims 1-22 or the method of any one of claims 23-25.

30. A computer-readable storage medium for storing instructions, wherein when the instructions are executed, the method of any one of claims 1-22 or the method of any one of claims 23-25 is implemented.
